# EUROPEAN PATENT APPLICATION

(11) **EP 4 794 081 A1**
(43) Date of publication of application: **19.08.2026**
(21) Application number: 24890308.0
(22) Date of filing: 11.09.2024
(51) Int. Cl.: H01M 50/244, H01M 10/6556, B60K 1/04, H01M 50/209

(54) **BATTERY BOX, MANUFACTURING METHOD FOR BATTERY BOX, BATTERY AND ELECTRIC DEVICE**

(30) Priority: 17.11.2023 CN 202311544221
(71) Applicant: Contemporary Amperex Technology Co., Limited, Ningde, Fujian 352100 (CN)
(72) Inventor: WU, Kai, Ningde, Fujian 352100 (CN); WANG, Liangyi, Ningde, Fujian 352100 (CN); WANG, Zhi, Ningde, Fujian 352100 (CN); WANG, Yalei, Ningde, Fujian 352100 (CN); QIN, Feng, Ningde, Fujian 352100 (CN)
(74) Representative: Ran, Handong
(86) International application number: PCT/CN2024/118160
(87) International publication number: WO 2025/102949

(57) **Abstract**

A battery box (100), a manufacturing method for the battery box (100), a battery (1100) and an electric device, the battery box (100) comprising a first box body (110). The first box body (110) comprises a plate component (111), one side of the plate component (111) being provided with an accommodating space (1101) for accommodating a battery cell (200). The plate component (111) comprises a plate body portion (1111) and a first bent portion (1112), wherein the first bent portion (1112) is bent towards the accommodating space (1101) from the edge of the plate body portion (1111). The fillet radius at the bend of the edge of the plate component (111) is small, so that the width dimension of the first box body (110) can be reduced, thereby reducing the width dimension of the battery box (100); thus, the space occupied by the battery (1100) in the electric device can be reduced, facilitating improvement to the structural compactness and usage performance of the electric device.

## Description

This application claims priority to the Chinese Patent Application No. 202311544221.0, filed with the China National Intellectual Property Administration on November 17, 2023 and entitled "BATTERY BOX, METHOD FOR MANUFACTURING BATTERY BOX, BATTERY, AND ELECTRIC APPARATUS", which is incorporated herein by reference in its entirety.

### TECHNICAL FIELD

This application pertains to the field of battery technology, and particularly relates to a battery box, a method for manufacturing a battery box, a battery, and an electric apparatus.

### BACKGROUND

An electric apparatus may refer to a device that uses a battery as a power source. A battery typically includes a battery box and one or more battery cells disposed in the battery box. A box body of the battery box is typically formed by blow molding, but the outer dimensions of the box body formed by blow molding are large, which causes the battery to occupy a large installation space when installed in the electric apparatus, resulting in a high space occupancy rate of the battery in the electric apparatus, thus affecting the structural compactness and usage performance of the electric apparatus.

The foregoing description is provided merely to provide background technical information related to this application and does not necessarily constitute prior art.

### SUMMARY

Embodiments of this application are intended to provide a battery box, a method for manufacturing a battery box, a battery, and an electric apparatus, which can solve problems including but not limited to the problem in the related art that the space occupancy rate of the battery in the electric apparatus is high and thus the structural compactness and usage performance of the electric apparatus are affected.

The technical solutions adopted by the embodiments of this application are as follows:

According to a first aspect, a battery box is provided, where the battery box includes a first box body, the first box body includes a plate member, and one side of the plate member is provided with an accommodating space for accommodating a battery cell, the plate member includes a plate body portion and a first bent portion, and the first bent portion is bent from an edge portion of the plate body portion to the accommodating space.

In the battery box according to the embodiments of this application, the first box body of the battery box includes the plate member, one side of the plate member is provided with the accommodating space for accommodating the battery cell, the plate member includes the plate body portion and the first bent portion, and the first bent portion is bent from the edge portion of the plate body portion to the accommodating space, so that the edge portion of the plate member is bent to form the bent portion and the plate body portion. Compared with a box body formed by blow molding, the first box body formed by bending has a small bent fillet radius at the edge portion of the plate member, which can reduce a width dimension of the first box body, reduce a width dimension of the battery box, and reduce the space occupied by the battery in the electric apparatus, thereby helping to improve the structural compactness and usage performance of the electric apparatus.

In an embodiment, the first bent portion includes a bent arc segment and a first connection segment, and the bent arc segment is connected between the first connection segment and the plate body portion.

By adopting the technical solution of this embodiment, the first connection segment and the plate body portion are connected through an arc transition of the bent arc segment, which helps to reduce stress concentration, allows the edge portion of the plate member to have good structural strength, and allows the first box body to have a good protection effect on the battery cell.

In an embodiment, a thickness of the first connection segment is t, and a radius of the bent arc segment is R; where 0.8 ≤ R/t ≤ 2, preferably 1 ≤ R/t ≤ 1.5.

By adopting the technical solution of this embodiment, a bent fillet radius of the first bent portion can be limited to a small and reasonable range, which allows the width of the first box body to be small, and also makes the bending operation of the first bent portion easy and simple.

In an embodiment, the radius of the bent arc segment is R, where 0.5 mm ≤ R ≤ 4 mm, preferably 1 mm ≤ R ≤ 2 mm.

By adopting the technical solution of this embodiment, the bent fillet radius of the first bent portion is smaller than a bent fillet radius of the box body formed by blow molding, which reduces the width of the first box body. In addition, the first bent portion has a certain bent fillet, making the bending operation of the first bent portion easy and simple, reducing the risk of damage such as fracture caused by excessive bending of the first bent portion, and helping to improve the structural strength of the first box body.

In an embodiment, an included angle between the first connection segment and the plate body portion is α, where 85° ≤ α ≤ 95°, preferably 89° ≤ α ≤ 91°.

By adopting the technical solution of this embodiment, the first connection segment is perpendicular or approximately perpendicular to the plate body portion, which can reduce the width dimension of the first box body, reduce the width of the battery box, and reduce the space occupied by the battery in the electric apparatus, thereby helping to improve the structural compactness and usage performance of the electric apparatus.

In an embodiment, the plate member further includes a second bent portion, the second bent portion is bent from an end portion of the first bent portion facing away from the plate body portion to the plate body portion, and the second bent portion is located on a side portion of the first bent portion facing away from the plate body portion.

By adopting the technical solution of this embodiment, the second bent portion is bent to the plate body portion relative to the first bent segment. Compared with the box body formed by blow molding, the second bent portion is not parallel to the plate body portion, which can reduce a dimension of the second bent portion in a width direction of the plate member, reduce the width of the first box body, reduce the width of the battery box, and reduce the space occupied by the battery in the electric apparatus, thereby helping to improve the structural compactness and usage performance of the electric apparatus.

In an embodiment, the second bent portion includes a bent semicircular segment and a second connection segment, one end of the bent semicircular segment is connected to the end portion of the first bent portion facing away from the plate body portion, and the other end of the bent semicircular segment is connected to one end of the second connection segment.

By adopting the technical solution of this embodiment, the arrangement of the bent semicircular segment enables the edge portion of the plate member to be bent by 180°, so that the first bent portion and the second bent portion can form a stacked structure in the width direction of the plate member. Compared with the box body formed by blow molding, this can effectively reduce the width of the first box body, reduce the width of the battery box, and reduce the space occupied by the battery in the electric apparatus, thereby helping to improve the structural compactness and usage performance of the electric apparatus. In addition, the stacked structure can also improve the structural strength of the edge portion of the plate member, helping to improve the protection effect of the battery box on the battery cell, and also helping to improve the structural reliability of the battery.

In an embodiment, the second connection segment is attached to the first bent portion.

By adopting the technical solution of this embodiment, there is no gap between the second connection segment and the first bent portion, making the width of the first box body smaller, reducing the width of the battery box, and reducing the space occupied by the battery in the electric apparatus, thereby helping to improve the structural compactness and usage performance of the electric apparatus. In addition, the attachment of the second connection segment to the first bent portion can also improve the structural strength of the edge portion of the plate member, helping to improve the protection effect of the battery box on the battery cell, and also helping to improve the structural reliability of the battery.

In an embodiment, the plate member further includes a reinforcing portion, one end of the reinforcing portion is connected to an end portion of the second bent portion close to the plate body portion, and the other end of the reinforcing portion is connected to a surface of the plate body portion facing away from the accommodating space.

By adopting the technical solution of this embodiment, the reinforcing portion is located on a side of the plate body portion facing away from the accommodating space, so that the reinforcing portion can support the plate body portion, improving the structural strength of the first box body, improving the protection effect of the battery box on the battery cell, and improving the structural reliability of the battery.

In an embodiment, the reinforcing portion and the plate body portion enclose a cavity.

By adopting the technical solution of this embodiment, the reinforcing portion and the plate body portion enclose the cavity, so that the reinforcing portion and the plate body portion form a cavity structure, which also effectively improves the structural strength of the first box body, improves the protection effect of the battery box on the battery cell, and improves the structural reliability of the battery. In addition, the cavity can provide space for connection between the first box body and other components (for example, a second box body or a chassis of a vehicle), thereby improving the structural compactness of the battery box.

In an embodiment, the reinforcing portion includes a first reinforcing segment, a second reinforcing segment, and a third reinforcing segment connected in sequence, one end of the first reinforcing segment facing away from the second reinforcing segment is connected to the end portion of the second bent portion close to the plate body portion, and one end of the third reinforcing segment facing away from the second reinforcing segment is connected to the surface of the plate body portion facing away from the accommodating space; and
the second reinforcing segment is spaced apart from the surface of the plate body portion facing away from the accommodating space, so that the first reinforcing segment, the second reinforcing segment, the third reinforcing segment, and the plate body portion jointly enclose the cavity.

By adopting the technical solution of this embodiment, the reinforcing portion adopts a structural form including the first reinforcing segment, the second reinforcing segment, and the third reinforcing segment, which has a simple structure and is convenient to process and manufacture.

In an embodiment, the reinforcing portion further includes a fourth reinforcing segment, one end of the fourth reinforcing segment is connected to an end portion of the third reinforcing segment facing away from the second reinforcing segment, and the fourth reinforcing segment is attached to the surface of the plate body portion facing away from the accommodating space.

By adopting the technical solution of this embodiment, the fourth reinforcing segment is attached to the surface of the plate body portion facing away from the accommodating space, which can effectively support the plate body portion and effectively improve the structural strength of the first box body, thereby greatly improving the structural strength of the battery box and helping to improve the usage reliability of the battery.

In an embodiment, the battery box further includes a second box body, the second box body is connected to the second bent portion in a sealing manner, and the first box body and the second box body enclose the accommodating space.

By adopting the technical solution of this embodiment, the second bent portion is located on an outer side of the first box body, and the sealed connection operation between the second box body and the second bent portion is simple and convenient. In addition, a surface of the second bent portion facing away from the plate body portion has a large area, which can increase a sealing area and improve the sealing performance between the second box body and the second bent portion.

In an embodiment, the second bent portion is located in the second box body, and a sealing member is disposed between the surface of the second bent portion facing away from the plate body portion and an inner wall surface of the second box body.

By adopting the technical solution of this embodiment, the surface of the second bent portion facing away from the plate body portion has a large area, and the sealing member may be set to be large, increasing the sealing area and improving the sealing performance between the second box body and the second bent portion. In addition, the sealing member is disposed between the surface of the second bent portion facing away from the plate body portion and the inner wall surface of the second box body, so that the sealing structure is simple, and the assembly operation is simple, helping to improve the production efficiency.

In an embodiment, the battery box further includes a fastener, the reinforcing portion is provided with a first connection hole in communication with the cavity, and the fastener passes through the first connection hole and is connected to the second box body, so that the sealing member is clamped and fixed between the surface of the second bent portion facing away from the plate body portion and the inner wall surface of the second box body.

By adopting the technical solution of this embodiment, the reinforcing portion and the second box body are connected through the fastener, the connection structure is simple and convenient to process and manufacture. In addition, the sealing member is clamped and fixed between the surface of the second bent portion facing away from the plate body portion and the inner wall surface of the second box body, so that the reinforcing portion is located outside the accommodating space. In this way, providing the first connection hole in the reinforcing portion has little impact on the sealing performance of the accommodating space, helping to improve the protection effect on the battery cell, thereby improving the usage reliability of the battery. Moreover, the first connection hole is in communication with the cavity, and the cavity can provide an installation space for the fastener, which also helps to improve the space utilization of the battery.

In an embodiment, the reinforcing portion is provided with a mounting structure for fixing the battery box.

By adopting the technical solution of this embodiment, the reinforcing portion located outside the accommodating space is provided with the mounting structure, which has little impact on the sealing performance of the accommodating space, helping to improve the protection effect on the battery cell, thereby improving the usage reliability of the battery. In addition, the reinforcing portion also has good structural strength, improving the stable reliability of the battery in the electric apparatus.

In an embodiment, the mounting structure includes a second connection hole, and the second connection hole is in communication with the cavity.

By adopting the technical solution of this embodiment, the mounting structure adopts a structural form with the second connection hole, which has a simple structure and is convenient to process and manufacture. In addition, the second connection hole is in communication with the cavity, so that a connection member configured to fixedly connect the battery box and the electric apparatus can utilize the space of the cavity for installation, making the space in the first box body fully utilized, thereby helping to improve the structural compactness and usage performance of the electric apparatus.

In an embodiment, in a direction from the first bent portion to the second bent portion, a dimension of the plate body portion is L₁, and a dimension of the reinforcing portion is L₂; where 0.05 ≤ L₂/L₁ ≤ 0.25, preferably 0.1 ≤ L₂/L₁ ≤ 0.2.

By adopting the technical solution of this embodiment, a proportion of the reinforcing portion in a width direction of the plate body portion is small, the reinforcing portion is disposed close to the edge portion of the plate body portion, and the reinforcing portion can provide good reinforcement and support for the edge portion of the plate body portion, improving the structural strength of the first box body, and improving the usage reliability of the battery in the electric apparatus.

In an embodiment, two edge portions of the plate body portion oppositely distributed along a first direction are each provided with the first bent portion.

By adopting the technical solution of this embodiment, the two opposite edge portions of the plate member are bent to form two first bent portions, and bent fillet radii of two opposite side edge portions of the plate member may be set to be small, which can better reduce the width of the first box body and reduce the width of the battery box, thereby helping to improve the structural compactness and usage performance of the battery and the electric apparatus.

In an embodiment, the plate member further includes a third bent portion and a fourth bent portion, the third bent portion is bent from one of two edge portions of the plate body portion oppositely distributed along a second direction to the accommodating space, the fourth bent portion is bent from the other of the two edge portions of the plate body portion oppositely distributed along the second direction to the accommodating space, and the first direction intersects the second direction.

By adopting the technical solution of this embodiment, the other two opposite edge portions of the plate member are bent to form the third bent portion and the fourth bent portion respectively, and bent fillet radii of the other two opposite edge portions of the plate member may be set to be small, which can better reduce a length of the first box body and reduce a length of the battery box, thereby helping to improve the structural compactness and usage performance of the battery and the electric apparatus.

In an embodiment, the first box body further includes a first sealing plate and a second sealing plate configured to be connected to the plate member; the first sealing plate is inserted between one end portion of the first bent portion and the third bent portion; the second sealing plate is inserted between the other end portion of the first bent portion and the fourth bent portion; and the first sealing plate, the second sealing plate, and the plate member enclose the accommodating space.

By adopting the technical solution of this embodiment, the first sealing plate is inserted between one end portion of the first bent portion and the third bent portion, which can achieve pre-positioning of the first sealing plate to facilitate subsequent fixing operations. Similarly, the second sealing plate is inserted between the other end portion of the first bent portion and the fourth bent portion, which can also achieve pre-positioning of the second sealing plate to facilitate subsequent fixing operations.

In an embodiment, the battery box further includes a second box body, two opposite side portions of the second box body along the first direction are respectively connected to the two first bent portions, one of two opposite side portions of the second box body along the second direction is connected to the first sealing plate, and the other of the two opposite side portions of the second box body along the second direction is connected to the second sealing plate.

By adopting the technical solution of this embodiment, two opposite sides of the second box body are respectively connected to two second bent portions, and the other two opposite sides of the second box body are respectively connected to the first sealing plate and the second sealing plate, so that the first box body and the second box body enclose the accommodating space, and the battery box has a simple structure and is convenient to process and manufacture.

In an embodiment, the first box body further includes a plurality of mounting beams configured to be connected to the plate body portion, the plurality of mounting beams are spaced apart along a second direction, and the first direction intersects the second direction.

By adopting the technical solution of this embodiment, the provision of the plurality of mounting beams can reinforce the structural strength of the plate body portion and improve the structural strength of the first box body in a width direction, thereby helping to improve the usage reliability of the battery and the electric apparatus.

In an embodiment, the plurality of mounting beams are located on a side portion of the plate body portion facing away from the accommodating space.

By adopting the technical solution of this embodiment, the mounting beams are located outside the accommodating space, and the mounting beams do not occupy the space of the accommodating space, so that the accommodating space can accommodate more battery cells, helping to increase the energy density of the battery.

In an embodiment, the first box body further includes a first module beam and a second module beam configured to be connected to the battery cell and the plate member, the first module beam and the second module beam are located in the accommodating space, the first module beam is located at one of two edge portions of the plate body portion oppositely distributed along the second direction, and the second module beam is located at the other of the two edge portions of the plate body portion oppositely distributed along the second direction.

By adopting the technical solution of this embodiment, the first module beam and the second module beam can support and fix the battery cell, improving the usage reliability of the battery.

In an embodiment, in the second direction, the first one of the mounting beams is disposed opposite the first module beam, and/or the last one of the mounting beams is disposed opposite the second module beam.

By adopting the technical solution of this embodiment, the structural strength of the first box body can be improved, helping to improve the usage reliability of the battery.

In an embodiment, the plate body portion is provided with a heat exchange channel for a heat exchange medium to flow through.

By adopting the technical solution of this embodiment, the heat exchange channel can achieve temperature control of the battery cell, helping to improve the performance of the battery cell and the battery.

In an embodiment, the plate body portion further includes a first plate body sub-portion and a second plate body sub-portion connected to each other, and the first plate body sub-portion and the second plate body sub-portion are stacked along a direction from the plate body portion to the accommodating space; and at least one of the first plate body sub-portion and the second plate body sub-portion is recessed away from the other to form the heat exchange channel.

By adopting the technical solution of this embodiment, the structure of the plate body portion is simple, helping to reduce the manufacturing cost of the battery box.

According to a second aspect, a method for manufacturing a battery box is provided, where the method for manufacturing a battery box is used for manufacturing the battery box according to the foregoing embodiments; and the method for manufacturing a battery box includes the following step: bending an edge portion of a plate member to an accommodating space to form a plate body portion and a first bent portion.

In the method for manufacturing a battery box according to the embodiments of this application, the edge portion of the plate member is bent to form the bent portion and the plate body portion. Compared with a box body formed by blow molding, a first box body formed by bending has a small bent fillet radius at the edge portion of the plate member, which can reduce a width dimension of the first box body, reduce a width dimension of the battery box, and reduce the space occupied by a battery in an electric apparatus, thereby helping to improve the structural compactness and usage performance of the electric apparatus.

In an embodiment, the method for manufacturing a battery box includes the following method: roll-bending an edge portion of a plate member to form a plate body portion and a first bent portion.

By adopting the technical solution of this embodiment, the edge portion of the plate member can be bent by rolling or by a bending machine, and the manufacturing method is simple. In addition, compared with the box body formed by blow molding, the first box body formed by roll-bending has a small bent fillet radius at the edge portion of the plate member, which can reduce the width dimension of the first box body, reduce the width dimension of the battery box, and reduce the space occupied by the battery in the electric apparatus, thereby helping to improve the structural compactness and usage performance of the electric apparatus.

In an embodiment, the plate body portion further includes a first plate body sub-portion and a second plate body sub-portion connected to each other; the first plate body sub-portion and the second plate body sub-portion are stacked along a direction from the plate body portion to the accommodating space; and at least one of the first plate body sub-portion and the second plate body sub-portion is recessed away from the other by blow molding to form a heat exchange channel for a heat exchange medium to flow through.

By adopting the technical solution of this embodiment, recesses of the first plate body sub-portion and the second plate body sub-portion can form the heat exchange channel by blow molding or stamping. Compared with other methods, the blow molding method allows thicknesses of the first plate body sub-portion and the second plate body sub-portion to be set to be smaller, making the mass of the first box body smaller.

According to a third aspect, a battery is provided, including the battery box according to the foregoing embodiments and at least one battery cell, where the battery cell is accommodated in the accommodating space, or the battery includes a battery box manufactured by the method for manufacturing a battery box according to the foregoing embodiments and at least one battery cell, where the battery cell is accommodated in the accommodating space.

In the battery according to the embodiments of this application, the above battery box or a battery box manufactured by the above method for manufacturing a battery box is adopted, which reduces a width dimension of a first box body, reduces a width dimension of the battery box, and reduces the space occupied by the battery in an electric apparatus, thereby helping to improve the structural compactness and usage performance of the electric apparatus.

According to a fourth aspect, an electric apparatus is provided, including the battery according to the foregoing embodiments.

In the electric apparatus according to the embodiments of this application, the above battery is adopted, which reduces a width dimension of a first box body, reduces a width dimension of a battery box, and reduces the space occupied by the battery in the electric apparatus, thereby helping to improve the structural compactness and usage performance of the electric apparatus.

The foregoing description is merely an overview of the technical solutions of this application. In order to more clearly understand the technical means of this application and to implement them in accordance with the contents of the description, and in order to make the above and other objects, features, and advantages of this application more obvious and easy to understand, the specific embodiments of this application are specifically illustrated below.

### BRIEF DESCRIPTION OF DRAWINGS

In order to more clearly illustrate the technical solutions in the embodiments of this application, the accompanying drawings to be used in the description of the embodiments or the prior art will be briefly introduced below. Apparently, the accompanying drawings described below are only some embodiments of this application. For those of ordinary skill in the art, other accompanying drawings can also be obtained based on these accompanying drawings without creative efforts.
FIG. 1 is a schematic structural diagram of a vehicle according to an embodiment of this application.
FIG. 2 is a schematic structural diagram of a battery according to another embodiment of this application from a first perspective.
FIG. 3 is a schematic exploded view of the battery shown in FIG. 2.
FIG. 4 is a schematic structural diagram of a first box body shown in FIG. 3 from a second perspective.
FIG. 5 is a schematic structural diagram of the first box body shown in FIG. 3 from a third perspective.
FIG. 6 is a cross-sectional view taken along line A-A in FIG. 5.
FIG. 7 is a partially enlarged view at part B in FIG. 6.
FIG. 8 is a schematic structural diagram of the battery shown in FIG. 2 from a fourth perspective.
FIG. 9 is a cross-sectional view taken along line C-C in FIG. 8.
FIG. 10 is a partially enlarged view at part D in FIG. 9.
FIG. 11 is a schematic exploded view of the first box body shown in FIG. 4.
FIG. 12 is a cross-sectional view of a first box body taken along line A-A in FIG. 5 according to another embodiment of this application.
FIG. 13 is a partially enlarged view at part E in FIG. 12.

The reference signs in the drawings are as follows:
1000. vehicle; 1100. battery; 1200. controller; 1300. motor; 100. battery box; 110. first box body; 1101. accommodating space; 1102. heat exchange channel; 111. plate member; 1111. plate body portion; 11111. first plate body sub-portion; 11112. second plate body sub-portion; 1112. first bent portion; 11121. bent arc segment; 11122. first connection segment; 1113. second bent portion; 11131. bent semicircular segment; 11132. second connection segment; 1114. reinforcing portion; 11141. first reinforcing segment; 11142. second reinforcing segment; 11143. third reinforcing segment; 11144. fourth reinforcing segment; 11145. cavity; 11146. first connection hole; 1115. third bent portion; 1116. fourth bent portion; 112. first sealing plate; 113. second sealing plate; 114. mounting beam; 115. first module beam; 116. second module beam; 120. second box body; 130. sealing member; 140. fastener; and 200. battery cell.

### DESCRIPTION OF EMBODIMENTS

In order to make the technical problems to be solved, the technical solutions, and the beneficial effects of this application clearer, this application will be further described in detail below with reference to the accompanying drawings and the embodiments. It should be understood that the specific embodiments described herein are only used to explain this application and are not used to limit this application.

Unless otherwise defined, all technical and scientific terms used herein have the same meaning as commonly understood by those of ordinary skill in the art to which this application belongs. The terms used herein are for the purpose of describing specific embodiments only and are not intended to limit this application. The terms "comprise", "include", "have", and any variations thereof in the description and claims of this application and the foregoing description of the drawings are intended to cover non-exclusive inclusions.

In the description of the embodiments of this application, the technical terms "first", "second", and the like are used only to distinguish different objects and should not be understood as indicating or implying relative importance or implicitly indicating the number, specific order, or primary-secondary relationship of the indicated technical features. Therefore, a feature limited by "first" or "second" may explicitly or implicitly include one or more such features.

Reference to "embodiment" in the specification means that specific features, structures, or characteristics described with reference to an embodiment may be included in at least one embodiment of this application. The appearance of the phrase at various places in the specification does not necessarily refer to the same embodiment, nor is it an independent or alternative embodiment that is mutually exclusive from other embodiments. Those of ordinary skill in the art will explicitly and implicitly understand that the embodiments described herein can be combined with other embodiments in any suitable manner.

In the description of the embodiments of this application, the term "and/or" is only an associative relationship for describing associated objects, indicating that three relationships may be present. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces. The meaning of "several" is one or more, unless otherwise clearly and specifically limited.

In the description of the embodiments of this application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on the orientations or positional relationships shown in the drawings, which are only for facilitating the description of the embodiments of this application and simplifying the description, and do not indicate or imply that the referred device or element must have specific orientations or must be constructed or manipulated according to specific orientations, and therefore shall not be construed as any limitation on these embodiments of this application.

In the description of the embodiments of this application, unless otherwise clearly specified and limited, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection through an intermediary, an internal communication between two elements, or an interaction between two elements. For those of ordinary skill in the art, the specific meanings of the above terms in the embodiments of this application can be understood according to specific situations.

In the description of the embodiments of this application, unless otherwise clearly specified and limited, when a component is referred to as being "fastened to" or "disposed on" another component, it may be directly or indirectly fastened to the another component. When a component is referred to as being "connected to" another component, it may be directly or indirectly connected to the another component.

In this application, a battery refers to a single physical module that includes one or more battery cells to provide higher voltage and capacity. For example, the battery mentioned in this application may include a battery module or a battery pack. Some batteries may include a battery box configured to encapsulate one or more battery cells or multiple battery modules, and the battery box can prevent liquids or other foreign objects from affecting the charging or discharging of the battery cells or battery modules.

In this application, the battery cell may include a lithium-ion secondary battery, a lithium-ion primary battery, a lithium-sulfur battery, a sodium-lithium ion battery, a sodium-ion battery, or a magnesium-ion battery, which is not limited in the embodiments of this application. The battery cell may be in a cylindrical shape, a flat shape, a rectangular shape, or another shape, which is not limited in the embodiments of this application. Battery cells are generally divided into three types according to packaging methods: cylindrical battery cells, prismatic battery cells, and pouch battery cells, which are not limited in the embodiments of this application.

A box body of the battery box is typically formed by blow molding, and an edge portion of the box body formed by blow molding needs to be provided with a bent fillet with a large radius. However, the bent fillet with a large radius will increase outer dimensions of the box body, leading to large outer dimensions of the box body, requiring a large installation space when a battery is installed in an electric apparatus, and resulting in a high space occupancy rate of the battery in the electric apparatus, thus affecting the structural compactness and usage performance of the electric apparatus.

Based on this, an embodiment of this application provides a battery box, where a plate member of the battery box includes a plate body portion and a first bent portion. The first bent portion is bent from an edge portion of the plate body portion to an accommodating space. The edge portion of the plate member is bent to form the bent portion and the plate body portion. Compared with a blow molding method, the bending method allows for a small bent fillet radius at the edge portion of the plate member, which can reduce a dimension of the edge portion of the plate member, reduce an outer dimension of the battery box, and reduce the space occupied by a battery in an electric apparatus, thereby helping to improve the structural compactness and usage performance of the electric apparatus.

According to the battery box, battery, and electric apparatus using the battery as a power source disclosed in the embodiments of this application, the electric apparatus may be but is not limited to a mobile phone, a tablet, a notebook computer, an electric toy, an electric tool, an electric bicycle, an electric car, a ship, a spacecraft, and the like. The electric toy may include a fixed or mobile electric toy, such as a game console, an electric toy car, an electric toy ship, and an electric toy aircraft. The spacecraft may include airplanes, rocket, space shuttle, and spaceship.

For ease of description, an electric apparatus according to an embodiment of this application being a vehicle 1000 is used as an example for description of the following embodiments.

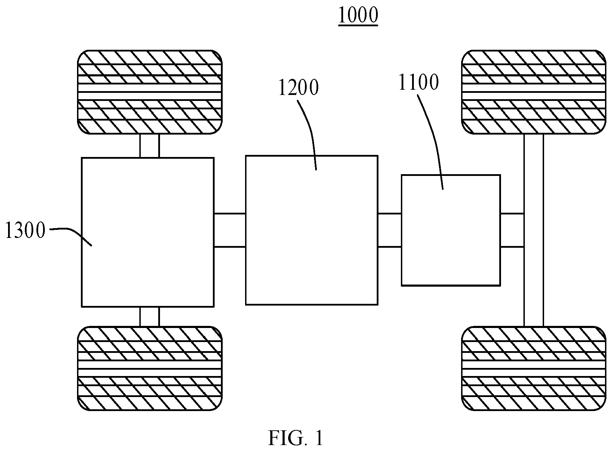

Referring to FIG. 1, FIG. 1 is a schematic structural diagram of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, or a range-extended electric vehicle. A battery 1100 is provided inside the vehicle 1000. The battery 1100 may be disposed at the bottom, head, or tail of the vehicle 1000. The battery 1100 may be configured to supply power to the vehicle 1000. For example, the battery 1100 may serve as an operating power source for the vehicle 1000. The vehicle 1000 may further include a controller 1200 and a motor 1300. The controller 1200 is configured to control the battery 1100 to supply power to the motor 1300, for example, to satisfy power needs of start, navigation, and driving of the vehicle 1000.

In some embodiments of this application, the battery 1100 can not only serve as an operating power source for the vehicle 1000, but also as a driving power source for the vehicle 1000, replacing or partially replacing fuel or natural gas to provide driving power for the vehicle 1000.

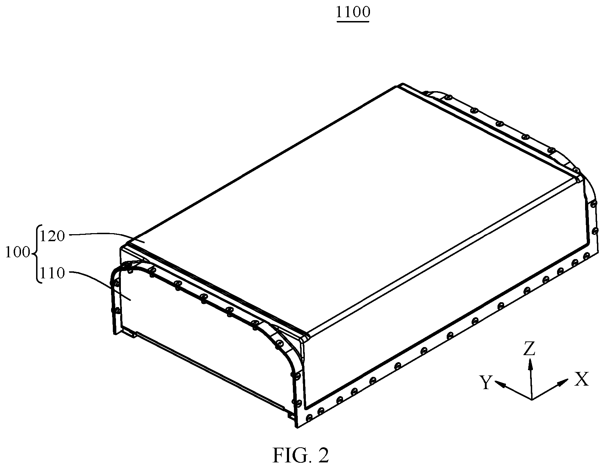

Referring to FIG. 2, as an embodiment of the battery 1100, the battery 1100 includes a battery box 100 and a battery cell 200. The battery cell 200 is accommodated in the battery box 100. The battery box 100 is configured to provide an accommodating space 1101 for the battery cell 200. The battery box 100 may adopt various structures. In some embodiments, the battery box 100 may include a first box body 110 and a second box body 120. The first box body 110 and the second box body 120 fit each other, such that the first box body 110 and the second box body 120 jointly define an accommodating space 1101 for accommodating the battery cell 200. The first box body 110 may be a plate-like structure. The second box body 120 may be a hollow structure with an opening at one section. The first box body 110 covers an opening side of the second box body 120, so that the first box body 110 and the second box body 120 jointly define the accommodating space 1101. Certainly, the box body formed by the first box body 110 and the second box body 120 may be in various shapes, such as a cylindrical shape and a rectangular shape. Certainly, in another embodiment, the battery box 100 may not include the second box body 120. The battery box 100 is directly fixed in the vehicle 1000 through the first box body 110.

In the battery 1100, a plurality of battery cells 200 may be provided. The plurality of battery cells 200 may be connected in series, parallel, or series-parallel, where being connected in series-parallel means a combination of series and parallel connections of the plurality of battery cells 200.

In an embodiment, the plurality of battery cells 200 may be directly connected in series, parallel, or series-parallel, and then an entirety formed by the plurality of battery cells 200 is accommodated in the battery box 100. Certainly, the battery 1100 may be formed by the plurality of battery cells 200 being connected in series, parallel, or series-parallel first to form battery 1100 modules and then a plurality of battery 1100 modules being connected in series, parallel, or series-parallel to form an entirety which is accommodated in the box body. The battery 1100 may further include other structures. For example, the battery 1100 may further include a bus component configured to achieve electrical connection between the plurality of battery cells 200.

Each battery cell 200 may be a secondary battery 1100 or a primary battery 1100, or may be a lithium-sulfur battery 1100, a sodium-ion battery 1100, or a magnesium-ion battery 1100, but is not limited thereto. The battery cell 200 may be in a cylindrical shape, a flat shape, a rectangular shape, or another shape.

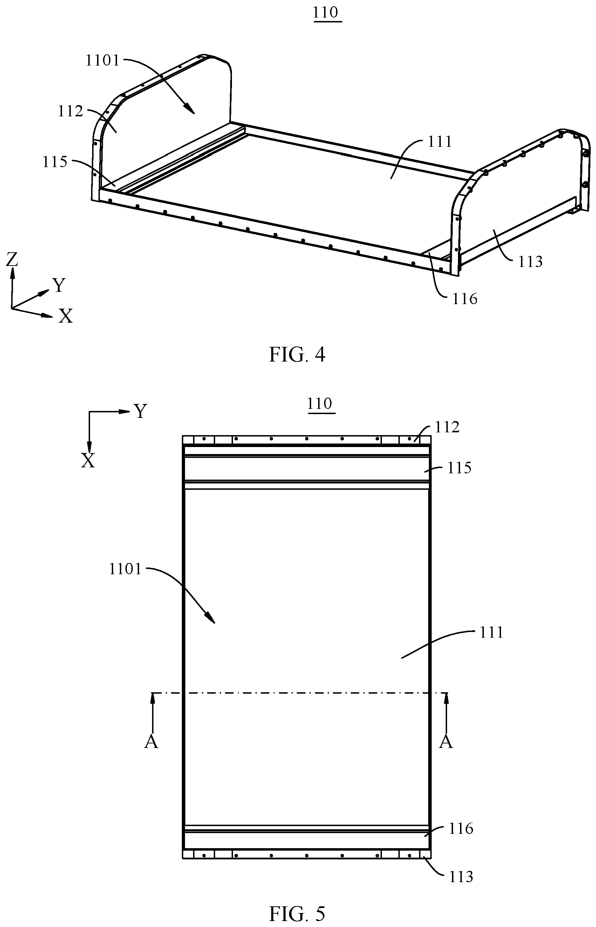

Referring to FIGs. 4 to 7 together, an embodiment of this application provides a battery box 100. The battery box 100 includes a first box body 110. The first box body 110 includes a plate member 111. One side of the plate member 111 is provided with an accommodating space 1101 for accommodating a battery cell 200. The plate member 111 includes a plate body portion 1111 and a first bent portion 1112. The first bent portion 1112 is bent from an edge portion of the plate body portion 1111 to the accommodating space 1101.

The plate member 111 may refer to a plate-like component in the first box body 110. Specifically, the plate member 111 may refer to a bottom plate located below the battery cell 200 in the battery box 100 body and configured to carry the battery cell 200, or a top plate located above the battery cell 200 in the battery box 100 body.

The accommodating space 1101 may refer to a space in the battery box 100 for accommodating the battery cell 200. Specifically, the accommodating space 1101 may be jointly enclosed by the first box body 110 and the second box body 120 after the first box body 110 is connected to the second box body 120. Alternatively, the accommodating space 1101 may be separately enclosed by the first box body 110.

The plate member 111 includes the plate body portion 1111 and the first bent portion 1112. The first bent portion 1112 is bent from the edge portion of the plate body portion 1111 to the accommodating space 1101. It can be understood that after the edge portion of the plate member 111 is bent to the accommodating space 1101, the plate member 111 is divided into the plate body portion 1111 and the first bent portion 1112 at a bending position as a boundary. The plate body portion 1111 may refer to a body portion of the plate member 111. The first bent portion 1112 may refer to a portion formed after the edge portion of the plate member 111 is bent. Specifically, after the first bent portion 1112 is bent to the accommodating space 1101, the first bent portion 1112 may be connected to the second box body 120 or components in the vehicle 1000 to facilitate connection of the plate member 111 to the second box body 120 or the vehicle 1000. In an embodiment, the edge portion of the plate member 111 may be bent by rolling or by a bending machine. The plate member 111 may be but is not limited to a steel plate.

The first box body 110 has a length direction, a width direction, and a height direction. The length direction of the first box body 110 may refer to a direction X in the drawings. The width direction of the first box body 110 may refer to a direction Y in the drawings. The height direction of the first box body 110 may refer to a direction Z in the drawings. For ease of understanding and description, in the embodiments provided by this application, only the edge portion of the plate member 111 being bent along the width direction (referring to the direction X in the drawings) to form the plate body portion 1111 and the first bent portion 1112 is described. It should be understood that the embodiments provided by this application are also applicable to a case where the plate member 111 is bent along the width direction to form the plate body portion 1111 and the first bent portion 1112.

In the battery box 100 according to the embodiments of this application, the first box body 110 of the battery box 100 includes the plate member 111, one side of the plate member 111 is provided with the accommodating space 1101 for accommodating the battery cell 200, the plate member 111 includes the plate body portion 1111 and the first bent portion 1112, and the first bent portion 1112 is bent from the edge portion of the plate body portion 1111 to the accommodating space 1101, so that the edge portion of the plate member 111 is bent to form the bent portion and the plate body portion 1111. Compared with a box body formed by blow molding, the first box body 110 formed by bending has a small bent fillet radius at the edge portion of the plate member 111, which can reduce a width dimension of the first box body 110, reduce a width dimension of the battery box 100, and reduce the space occupied by the battery 1100 in the electric apparatus, thereby helping to improve the structural compactness and usage performance of the electric apparatus.

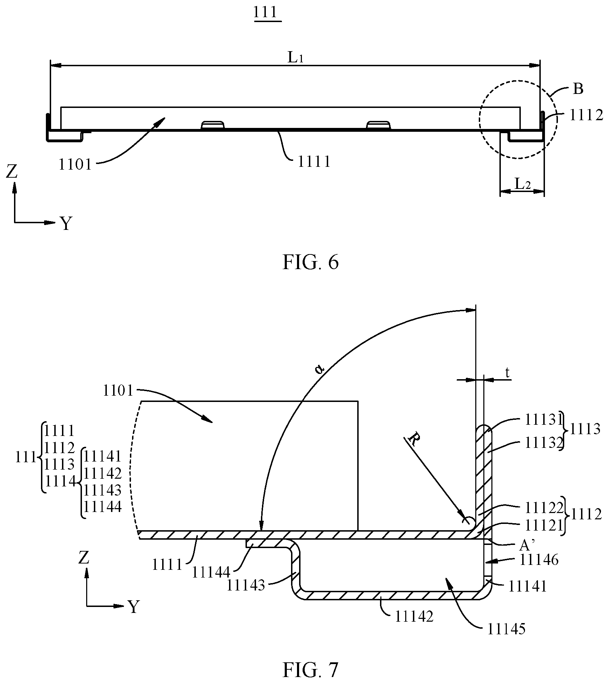

In another embodiment of this application, referring to FIG. 7, the first bent portion 1112 includes a bent arc segment 11121 and a first connection segment 11122, and the bent arc segment 11121 is connected between the first connection segment 11122 and the plate body portion 1111.

The first connection segment 11122 may refer to a portion of the plate member 111 that forms a certain included angle with respect to the plate body portion 1111.

The bent arc segment 11121 may refer to an arc portion formed after the edge portion of the plate member 111 is bent, and the bent arc segment 11121 is connected between the first connection segment 11122 and the plate body portion 1111.

By adopting the technical solution of this embodiment, the first connection segment 11122 and the plate body portion 1111 are connected through an arc transition of the bent arc segment 11121, which helps to reduce stress concentration, allows the edge portion of the plate member 111 to have good structural strength, and allows the first box body 110 to have a good protection effect on the battery cell 200.

Generally, a bent fillet radius at the edge portion of the box body formed by blow molding is typically greater than or equal to 5 mm.

In another embodiment of this application, referring to FIG. 7, a thickness of the first connection segment 11122 is t, and a radius of the bent arc segment 11121 is R; where 0.8 ≤ R/t ≤ 2.

For example, the plate member 111 adopts a uniform-thickness plate, and the thickness of the first connection segment 11122 formed after the plate member 111 is bent is equal to a thickness of the plate member 111, that is, the thickness of the first connection segment 11122 may refer to the thickness of the plate member 111.

The radius of the bent arc segment 11121 may refer to a radius of an inner arc surface of the bent arc segment 11121 facing the accommodating space 1101. The radius of the bent arc segment 11121 may also refer to a bent fillet radius of the first bent portion 1112.

By adopting the technical solution of this embodiment, the design of 0.8 ≤ R/t ≤ 2 can limit the bent fillet radius of the first bent portion 1112 to a small and reasonable range, which allows the width of the first box body 110 to be small, and also makes the bending operation of the first bent portion 1112 easy and simple.

In another embodiment of this application, referring to FIG. 7, 1 ≤ R/t ≤ 1.5.

By adopting the technical solution of this embodiment, the design of 1 ≤ R/t ≤ 1.5 can limit the bent fillet radius of the first bent portion 1112 to a small and more reasonable range, which allows the width of the first box body 110 to be small, and also makes the bending operation of the first bent portion 1112 easier and simpler.

In an embodiment, the value of R/t may be but is not limited to 0.8, 0.9, 1, 1.1, 1.2, 1.3, 1.4, 1.5, 1.6, 1.7, 1.8, 1.9, or 2.

Generally, for the box body solution of blow stamping, there are two bent fillets at the edge portion of the box body, and a radius of the bent fillet is 5 mm. In addition, to facilitate demolding, the bent edge portion of the box body formed by blow molding typically has a demolding taper of 1.5° to 3°, causing the bent edge portion to typically occupy a large bending space of the first box body 110.

In another embodiment of this application, referring to FIG. 7, the radius of the bent arc segment 11121 is R, where 0.5 mm ≤ R ≤ 4 mm.

By adopting the technical solution of this embodiment, the design of 0.5 mm ≤ R ≤ 4 mm makes the bent fillet radius of the first bent portion 1112 smaller than a bent fillet radius of the box body formed by blow molding, which reduces the width of the first box body 110. In addition, the first bent portion 1112 has a certain bent fillet, making the bending operation of the first bent portion 1112 easy and simple, reducing the risk of damage such as fracture caused by excessive bending of the first bent portion 1112, and helping to improve the structural strength of the first box body 110.

In another embodiment of this application, referring to FIG. 7, 1 mm ≤ R ≤ 2 mm.

By adopting the technical solution of this embodiment, the design of 1 mm ≤ R ≤ 2 mm makes the bent fillet radius of the first bent portion 1112 smaller than the bent fillet radius of the box body formed by blow molding, effectively reducing the width of the first box body 110. In addition, the first bent portion 1112 has an appropriate bent fillet, making the bending operation of the first bent portion 1112 easier and simpler, also reducing the risk of damage such as fracture caused by excessive bending of the first bent portion 1112, and helping to improve the structural strength of the first box body 110.

In an embodiment, the value of R may be but is not limited to 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, or 4 mm.

In another embodiment of this application, referring to FIG. 7, an included angle between the first connection segment 11122 and the plate body portion 1111 is α, where 85° ≤ α ≤ 95°.

By adopting the technical solution of this embodiment, the first connection segment 11122 is perpendicular or approximately perpendicular to the plate body portion 1111, which can reduce the width dimension of the first box body 110, reduce the width of the battery box 100, and reduce the space occupied by the battery 1100 in the electric apparatus, thereby helping to improve the structural compactness and usage performance of the electric apparatus.

In another embodiment of this application, referring to FIG. 7, 89° ≤ α ≤ 91°.

By adopting the technical solution of this embodiment, the design of 89° ≤ α ≤ 91° makes a width of the plate member 111 smaller than a width of the box body formed by blow molding, which can effectively reduce the width dimension of the first box body 110, reduce the width of the battery box 100, and reduce the space occupied by the battery 1100 in the electric apparatus, thereby helping to improve the structural compactness and usage performance of the electric apparatus.

In an embodiment, the value of α may be but is not limited to 85°, 86°, 87°, 88°, 89°, 90°, 91°, 92°, 93°, 94°, or 95°.

Generally, the edge portion formed by blow molding typically has a parallel segment parallel to a width direction of the box body, and the parallel segment greatly increases a width of the box body, resulting in a large width of the box body.

In another embodiment of this application, referring to FIG. 7, the plate member 111 further includes a second bent portion 1113. The second bent portion 1113 is bent from an end portion of the first bent portion 1112 facing away from the plate body portion 1111 to the plate body portion 1111. The second bent portion 1113 is located on a side portion of the first bent portion 1112 facing away from the plate body portion 1111.

For example, after bent to the accommodating space 1101, the edge portion of the plate member 111 is further bent to the plate body portion 1111, so that the edge portion of the plate member 111 forms the first bent portion 1112 and the second bent portion 1113, and the second bent portion 1113 is located on a side portion of the first bent portion 1112 facing away from the accommodating space 1101. The second bent portion 1113 is bent to the plate body portion 1111 relative to the first bent portion 1112, so that the second bent portion 1113 is not parallel to the plate body portion 1111, which can reduce a dimension of the second bent portion 1113 in the width direction of the plate member 111.

By adopting the technical solution of this embodiment, the second bent portion 1113 is bent to the plate body portion 1111 relative to the first bent segment. Compared with the box body formed by blow molding, the second bent portion 1113 is not parallel to the plate body portion 1111, which can reduce the dimension of the second bent portion 1113 in the width direction of the plate member 111, reduce the width of the first box body 110, reduce the width of the battery box 100, and reduce the space occupied by the battery 1100 in the electric apparatus, thereby helping to improve the structural compactness and usage performance of the electric apparatus.

In another embodiment of this application, referring to FIG. 7, the second bent portion 1113 includes a bent semicircular segment 11131 and a second connection segment 11132. One end of the bent semicircular segment 11131 is connected to the end portion of the first bent portion 1112 facing away from the plate body portion 1111, and the other end of the bent semicircular segment 11131 is connected to one end of the second connection segment 11132.

The second bent portion 1113 is bent to the plate body portion 1111 by 180° relative to the first bent portion 1112, thereby forming the bent semicircular segment 11131 and the second connection segment 11132. The bent semicircular segment 11131 may refer to a semicircular portion formed by bending the plate member 111 by 180°. The second connection segment 11132 may refer to a portion in the plate member 111 connected to an end portion of the bent semicircular segment 11131 facing away from the first bent portion 1112 and located on a side portion of the first bent portion 1112 facing away from the first bent portion 1112.

For example, an end portion of the first connection segment 11122 facing away from the plate body portion 1111 is connected to one end of the bent semicircular segment 11131. The other end of the bent semicircular segment 11131 is connected to the second connection segment 11132. The second connection segment 11132 and the second connection segment 11132 are disposed in parallel, that is, the first connection segment 11122 and the second connection segment 11132 are stacked in parallel in the width direction of the plate member 111. This can effectively reduce the width of the first box body 110.

By adopting the technical solution of this embodiment, the arrangement of the bent semicircular segment 11131 enables the edge portion of the plate member 111 to be bent by 180°, so that the first bent portion 1112 and the second bent portion 1113 can form a stacked structure in the width direction of the plate member 111. Compared with the box body formed by blow molding, this can effectively reduce the width of the first box body 110, reduce the width of the battery box 100, and reduce the space occupied by the battery 1100 in the electric apparatus, thereby helping to improve the structural compactness and usage performance of the electric apparatus. In addition, the stacked structure can also improve the structural strength of the edge portion of the plate member 111, helping to improve the protection effect of the battery box 100 on the battery cell 200, and also helping to improve the structural reliability of the battery 1100.

In another embodiment of this application, referring to FIG. 7, the second connection segment 11132 is attached to the first bent portion 1112.

It can be understood that a surface of the first connection segment 11122 facing away from the plate body portion 1111 in the width direction of the plate member 111 is attached to the second connection segment 11132, so that there is no gap between the first connection segment 11122 and the second connection segment 11132. Certainly, in another embodiment, there may alternatively be a gap between the first connection segment 11122 and the second connection segment 11132.

By adopting the technical solution of this embodiment, there is no gap between the second connection segment 11132 and the first bent portion 1112, making the width of the first box body 110 smaller, reducing the width of the battery box 100, and reducing the space occupied by the battery 1100 in the electric apparatus, thereby helping to improve the structural compactness and usage performance of the electric apparatus. In addition, the attachment of the second connection segment 11132 to the first bent portion 1112 can also improve the structural strength of the edge portion of the plate member 111, helping to improve the protection effect of the battery box 100 on the battery cell 200, and also helping to improve the structural reliability of the battery 1100.

In another embodiment of this application, referring to FIG. 7, the plate member 111 further includes a reinforcing portion 1114. One end of the reinforcing portion 1114 is connected to an end portion of the second bent portion 1113 close to the plate body portion 1111, and the other end of the reinforcing portion 1114 is connected to a surface of the plate body portion 1111 facing away from the accommodating space 1101.

The reinforcing portion 1114 may refer to a portion in the plate member 111 connected between the surface of the plate body portion 1111 facing away from the accommodating space 1101 and the second bent portion 1113. For example, the reinforcing portion 1114 is located on a side of the plate body portion 1111 facing away from the accommodating space 1101. After the reinforcing portion 1114 is bent multiple times, the reinforcing portion 1114 is connected to the surface of the plate body portion 1111 facing away from the accommodating space 1101.

By adopting the technical solution of this embodiment, the reinforcing portion 1114 is located on the side of the plate body portion 1111 facing away from the accommodating space 1101, so that the reinforcing portion 1114 can support the plate body portion 1111, improving the structural strength of the first box body 110, improving the protection effect of the battery box 100 on the battery cell 200, and improving the structural reliability of the battery 1100.

In another embodiment of this application, referring to FIG. 7, the reinforcing portion 1114 and the plate body portion 1111 enclose a cavity 11145.

The cavity 11145 may refer to a cavity enclosed by the reinforcing portion 1114 and the plate body portion 1111. For example, a side wall of the cavity 11145 close to the second connection segment 11132 may alternatively be flush with a side surface of the second connection segment 11132 facing the first connection segment 11122, or may be staggered from the side surface of the second connection segment 11132 facing the first connection segment 11122.

By adopting the technical solution of this embodiment, the reinforcing portion 1114 and the plate body portion 1111 enclose the cavity 11145, so that the reinforcing portion 1114 and the plate body portion 1111 form a cavity structure, which also effectively improves the structural strength of the first box body 110, improves the protection effect of the battery box 100 on the battery cell 200, and improves the structural reliability of the battery 1100. In addition, the cavity 11145 can provide space for connection between the first box body 110 and other components (for example, a second box body 120 or a chassis of a vehicle 1000), thereby improving the structural compactness of the battery box 100.

In another embodiment of this application, referring to FIG. 7, the reinforcing portion 1114 includes a first reinforcing segment 11141, a second reinforcing segment 11142, and a third reinforcing segment 11143 connected in sequence. One end of the first reinforcing segment 11141 facing away from the second reinforcing segment 11142 is connected to the end portion of the second bent portion 1113 close to the plate body portion 1111. One end of the third reinforcing segment 11143 facing away from the second reinforcing segment 11142 is connected to the surface of the plate body portion 1111 facing away from the accommodating space 1101. The second reinforcing segment 11142 is spaced apart from the surface of the plate body portion 1111 facing away from the accommodating space 1101, so that the first reinforcing segment 11141, the second reinforcing segment 11142, the third reinforcing segment 11143, and the plate body portion 1111 jointly enclose the cavity 11145.

The reinforcing portion 1114 is bent twice. The reinforcing portion 1114 is divided into the first reinforcing segment 11141, the second reinforcing segment 11142, and the third reinforcing segment 11143 according to the two bending positions. The first reinforcing segment 11141 may refer to a segment of the reinforcing portion 1114 connected to the end portion of the second bent portion 1113 close to the plate body portion 1111. The third reinforcing segment 11143 may refer to a segment of the reinforcing portion 1114 connected to the surface of the plate body portion 1111 facing away from the accommodating space 1101. The second reinforcing segment 11142 may refer to a portion of the reinforcing portion 1114 connected between the first reinforcing segment 11141 and the third reinforcing segment 11143. The second reinforcing segment 11142 is spaced apart from the surface of the plate body portion 1111 facing away from the accommodating space 1101, so that surfaces of the first reinforcing segment 11141 and the third reinforcing segment 11143 opposite each other and surfaces of the plate body portion 1111 and the second reinforcing segment 11142 opposite each other jointly form the cavity 11145.

For example, the first reinforcing segment 11141 and the second connection segment 11132 are located in a same plane. The first reinforcing segment 11141 is located on a side of the plate body portion 1111 facing away from the accommodating space 1101. The first reinforcing segment 11141 and the second connection segment 11132 are divided by a plane where the surface of the plate body portion 1111 facing away from the accommodating space 1101 is located (referring to a plane of the vertical paper surface where the dotted line A' in FIG. 7 is located). The second reinforcing segment 11142 is vertically bent from an end portion of the first reinforcing segment 11141 facing away from the second connection segment 11132 to the plate body portion 1111, so that the second reinforcing segment 11142 is parallel to and spaced apart from the surface of the plate body portion 1111 facing away from the accommodating space 1101. The third reinforcing segment 11143 is vertically bent from the second reinforcing segment 11142 to the plate body portion 1111 in a direction facing away from the first reinforcing segment 11141, so that the first reinforcing segment 11141 and the third reinforcing segment 11143 are respectively vertically connected to two ends of the second reinforcing segment 11142. In addition, the first reinforcing segment 11141, the second reinforcing segment 11142, the third reinforcing segment 11143, and the plate body portion 1111 jointly enclose a rectangular cavity 11145. Such an arrangement makes the structure of the reinforcing portion 1114 simple and regular, facilitating processing and manufacturing. In addition, the reinforcing portion 1114 and the plate body portion 1111 form a rectangular cavity structure, so that the plate body portion 1111 can be well supported and fixed, and the structural strength of the first box body 110 is improved.

By adopting the technical solution of this embodiment, the reinforcing portion 1114 adopts a structural form including the first reinforcing segment 11141, the second reinforcing segment 11142, and the third reinforcing segment 11143, which has a simple structure and is convenient to process and manufacture.

In another embodiment of this application, referring to FIG. 7, the reinforcing portion 1114 further includes a fourth reinforcing segment 11144. One end of the fourth reinforcing segment 11144 is connected to an end portion of the third reinforcing segment 11143 facing away from the second reinforcing segment 11142. The fourth reinforcing segment 11144 is attached to the surface of the plate body portion 1111 facing away from the accommodating space 1101.

The fourth reinforcing segment 11144 may refer to a portion of the reinforcing portion 1114 attached to the surface of the accommodating space 1101. The fourth reinforcing segment 11144 may be bent from the third reinforcing segment 11143 to the cavity 11145 or bent facing away from the accommodating space 1101.

By adopting the technical solution of this embodiment, the fourth reinforcing segment 11144 is attached to the surface of the plate body portion 1111 facing away from the accommodating space 1101, which can effectively support the plate body portion 1111 and effectively improve the structural strength of the first box body 110, thereby greatly improving the structural strength of the battery box 100 and helping to improve the usage reliability of the battery 1100.

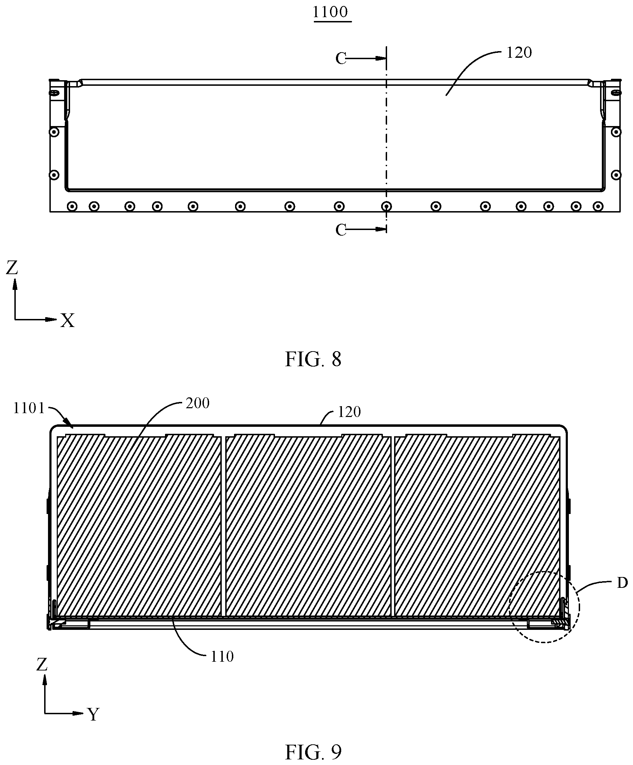

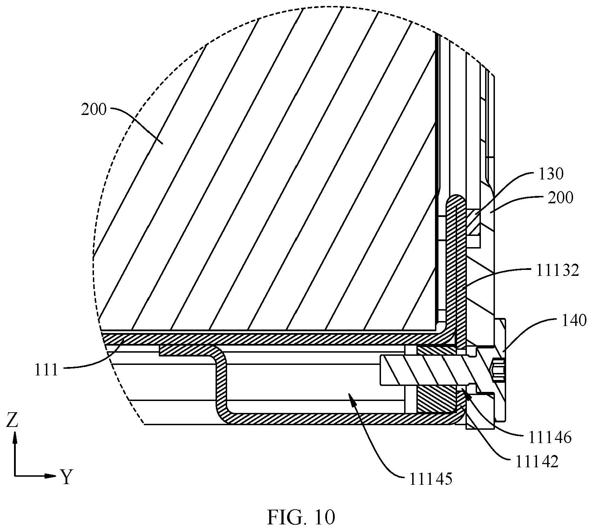

In another embodiment of this application, referring to FIGs. 7 to 10, the battery box 100 further includes a second box body 120. The second box body 120 is connected to the second bent portion 1113 in a sealing manner. The first box body 110 and the second box body 120 enclose the accommodating space 1101.

The second box body 120 may refer to a box body in the battery box 100 connected to the first box body 110 to enclose the accommodating space 1101. The second box body 120 is connected to the second bent portion 1113 in a sealing manner through a sealing adhesive, a sealing ring, a sealing strip, and the like.

By adopting the technical solution of this embodiment, the second bent portion 1113 is located on an outer side of the first box body 110. The sealed connection operation between the second box body 120 and the second bent portion 1113 is simple and convenient. In addition, a surface of the second bent portion 1113 facing away from the plate body portion 1111 has a large area, which can increase a sealing area and improve the sealing performance between the second box body 120 and the second bent portion 1113.

In another embodiment of this application, referring to FIGs. 7 to 10, the second bent portion 1113 is located in the second box body 120. A sealing member 130 is disposed between the surface of the second bent portion 1113 facing away from the plate body portion 1111 and an inner wall surface of the second box body 120.

The sealing member 130 may refer to a sealing component located between the surface of the second bent portion 1113 facing away from the plate body portion 1111 and the inner wall surface of the second box body 120. For example, the sealing member 130 may be but is not limited to a sealing ring or a sealing strip. The sealing member 130 may be made of elastic plastic. The elastic plastic may be but is not limited to rubber or silicone. In an embodiment, the sealing member 130 is clamped between the surface of the second bent portion 1113 facing away from the plate body portion 1111 and the inner wall surface of the second box body 120. The sealing member 130 has a certain compression amount to fill a gap between the surface of the second bent portion 1113 facing away from the plate body portion 1111 and the inner wall surface of the second box body 120, thereby achieving the sealed connection between the second bent portion 1113 and the second box body 120.

By adopting the technical solution of this embodiment, the surface of the second bent portion 1113 facing away from the plate body portion 1111 has a large area. The sealing member 130 may be set to be large, increasing the sealing area and improving the sealing performance between the second box body 120 and the second bent portion 1113. In addition, the sealing member 130 is disposed between the surface of the second bent portion 1113 facing away from the plate body portion 1111 and the inner wall surface of the second box body 120, so that the sealing structure is simple, and the assembly operation is simple, helping to improve the production efficiency.

In another embodiment of this application, referring to FIGs. 7 to 10, the battery box 100 further includes a fastener 140. The reinforcing portion 1114 is provided with a first connection hole 11146 in communication with the cavity 11145. The fastener 140 passes through the first connection hole 11146 and is connected to the second box body 120, so that the sealing member 130 is clamped and fixed between the surface of the second bent portion 1113 facing away from the plate body portion 1111 and the inner wall surface of the second box body 120.

The first connection hole 11146 may refer to a through hole that is provided in the reinforcing portion 1114 and is in communication with the cavity 11145. Specifically, the first reinforcing segment 11141 may be provided with the first connection hole 11146, the second reinforcing segment 11142 may also be provided with the first connection hole 11146, and the third reinforcing segment 11143 may also be provided with the first connection hole 11146, which can be specifically set according to actual needs. One or more first connection holes 11146 may be provided, which can be specifically set according to actual needs.

The fastener 140 may refer to a component that fixedly connects the second bent portion 1113 and the second box body 120. Specifically, the fastener 140 may be but is not limited to a bolt, a stud, a screw, a pin, a rivet, or a weld stud. In an embodiment, the fastener 140 includes a bolt and a nut. The second box body 120 covers the exterior of the first box body 110. The first reinforcing segment 11141 is provided with the first connection hole 11146. The bolt passes through a side portion of the second box body 120 and then passes through the first connection hole 11146 to be screwed with the nut, so that the first box body 110 and the second box body 120 are fixedly connected. In addition, under the connection action of the fastener 140, the sealing member 130 can also be stably clamped and fixed between the second bent portion 1113 and the inner wall surface of the second box body 120, thereby achieving the sealed connection.

By adopting the technical solution of this embodiment, the reinforcing portion 1114 and the second box body 120 are connected through the fastener 140. The connection structure is simple and convenient to process and manufacture. In addition, the sealing member 130 is clamped and fixed between the surface of the second bent portion 1113 facing away from the plate body portion 1111 and the inner wall surface of the second box body 120, so that the reinforcing portion 1114 is located outside the accommodating space 1101. In this way, providing the first connection hole 11146 in the reinforcing portion 1114 has little impact on the sealing performance of the accommodating space 1101, helping to improve the protection effect on the battery cell 200, thereby improving the usage reliability of the battery 1100. Moreover, the first connection hole 11146 is in communication with the cavity 11145. The cavity 11145 can provide an installation space for the fastener 140, which also helps to improve the space utilization of the battery 1100.

In another embodiment of this application, the reinforcing portion 1114 is provided with a mounting structure for fixing the battery box 100.

The mounting structure may refer to a structure configured in the reinforcing portion 1114 to be connected to the electric apparatus so as to fix the battery 1100 to the electric apparatus.

By adopting the technical solution of this embodiment, the reinforcing portion 1114 located outside the accommodating space 1101 is provided with the mounting structure, which has little impact on the sealing performance of the accommodating space 1101, helping to improve the protection effect on the battery cell 200, thereby improving the usage reliability of the battery 1100. In addition, the reinforcing portion 1114 also has good structural strength, improving the stable reliability of the battery 1100 in the electric apparatus.

In another embodiment of this application, the mounting structure includes a second connection hole. The second connection hole is in communication with the cavity 11145.

The second connection hole may refer to a through hole of the reinforcing portion 1114 in communication with the cavity 11145. Specifically, the first reinforcing segment 11141 may be provided with the second connection hole, the second reinforcing segment 11142 may also be provided with the second connection hole, and the third reinforcing segment 11143 may also be provided with the second connection hole, which can be specifically set according to actual needs. One or more second connection holes may be provided, which can be specifically set according to actual needs. The first connection hole 11146 and the second connection hole may be the same through hole or different through holes, which can be specifically set according to actual needs. In an embodiment, the fastener 140 passes through the second connection hole to be connected to the electric apparatus, thereby achieving fixation of the battery 1100 in the electric apparatus.

By adopting the technical solution of this embodiment, the mounting structure adopts a structural form with the second connection hole, which has a simple structure and is convenient to process and manufacture. In addition, the second connection hole is in communication with the cavity 11145, so that a connection member configured to fixedly connect the battery box 100 and the electric apparatus can utilize the space of the cavity 11145 for installation, making the space in the first box body 110 fully utilized, thereby helping to improve the structural compactness and usage performance of the electric apparatus.

In another embodiment of this application, referring to FIG. 6, in a direction from the first bent portion 1112 to the second bent portion 1113, a dimension of the plate body portion 1111 is L₁, and a dimension of the reinforcing portion 1114 is L₂; where 0.05 ≤ L₂/L₁ ≤ 0.25.

The direction from the first bent portion 1112 to the second bent portion 1113 may refer to the width direction of the first box body 110.

The dimension L₁ of the plate body portion 1111 may refer to a width of the plate body portion 1111.

The dimension L₂ of the reinforcing portion 1114 may refer to a width of the reinforcing portion 1114.

L₂/L₁ may refer to a ratio of the width of the reinforcing portion 1114 to the width of the plate body portion 1111.

By adopting the technical solution of this embodiment, the design of 0.05 ≤ L₂/L₁ ≤ 0.25 makes a proportion of the reinforcing portion 1114 in a width direction of the plate body portion 1111 small. The reinforcing portion 1114 is disposed close to the edge portion of the plate body portion 1111. The reinforcing portion 1114 can provide good reinforcement and support for the edge portion of the plate body portion 1111, improving the structural strength of the first box body 110, and improving the usage reliability of the battery 1100 in the electric apparatus.

In another embodiment of this application, referring to FIG. 6, 0.1 ≤ L₂/L₁ ≤ 0.2.

By adopting the technical solution of this embodiment, the design of 0.1 ≤ L₂/L₁ ≤ 0.2 allows the reinforcing portion 1114 to better support the edge portion of the plate body portion 1111, effectively improving the structural strength of the first box body 110, and improving the usage reliability of the battery 1100 in the electric apparatus.

In an embodiment, the value of L₂/L₁ may be but is not limited to 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, or 0.25.

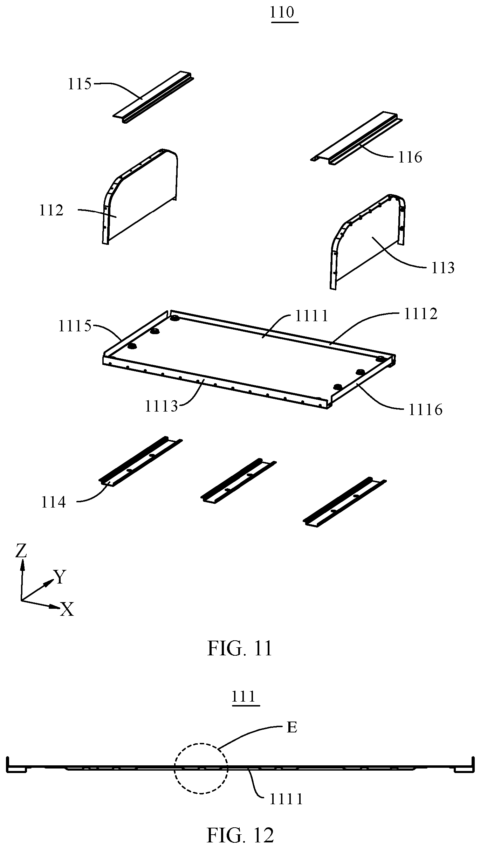

In another embodiment of this application, referring to FIGs. 4 and 11, two edge portions of the plate body portion 1111 oppositely distributed along a first direction are each provided with the first bent portion 1112.

For example, the first direction may refer to the width direction of the first box body 110. Two opposite edge portions of the plate member 111 along the width direction are bent to form two first bent portions 1112.

By adopting the technical solution of this embodiment, the two opposite edge portions of the plate member 111 are bent to form the two first bent portions 1112. Bent fillet radii of the two opposite side edge portions of the plate member 111 may be set to be small, which can better reduce the width of the first box body 110 and reduce the width of the battery box 100, thereby helping to improve the structural compactness and usage performance of the battery 1100 and the electric apparatus.

In another embodiment of this application, referring to FIGs. 4 and 11, the plate member 111 further includes a third bent portion 1115 and a fourth bent portion 1116. The third bent portion 1115 is bent from one of two edge portions of the plate body portion 1111 oppositely distributed along a second direction to the accommodating space 1101. The fourth bent portion 1116 is bent from the other of the two edge portions of the plate body portion 1111 oppositely distributed along the second direction to the accommodating space 1101. The first direction intersects the second direction.

For example, the second direction may refer to the length direction of the first box body 110. Two edge portions of the plate member 111 distributed along the length direction are also bent to form the third bent portion 1115 and the fourth bent portion 1116 respectively.

By adopting the technical solution of this embodiment, the other two opposite edge portions of the plate member 111 are bent to form the third bent portion 1115 and the fourth bent portion 1116 respectively. Bent fillet radii of the other two opposite edge portions of the plate member 111 may be set to be small, which can better reduce a length of the first box body 110 and reduce a length of the battery box 100, thereby helping to improve the structural compactness and usage performance of the battery 1100 and the electric apparatus.

In another embodiment of this application, referring to FIGs. 4 and 11, the first box body 110 further includes a first sealing plate 112 and a second sealing plate 113 configured to be connected to the plate member 111. The first sealing plate 112 is inserted between one end portion of the first bent portion 1112 and the third bent portion 1115. The second sealing plate 113 is inserted between the other end portion of the first bent portion 1112 and the fourth bent portion 1116. The first sealing plate 112, the second sealing plate 113, and the plate member 111 enclose the accommodating space 1101.

The first sealing plate 112 may refer to a component inserted between one end of the first bent portion 1112 and the third bent portion 1115. The second sealing plate 113 may refer to a component inserted between the other end of the first bent portion 1112 and the fourth bent portion 1116. The first sealing plate 112 and the second sealing plate 113 may be made of materials such as metal and plastic. The structures of the first sealing plate 112 and the second sealing plate 113 may be the same or different. Specifically, two ends of the third bent portion 1115 respectively form two first notches with the two first bent portions 1112. The first sealing plate 112 is inserted into the two first notches, achieving pre-positioning of the first sealing plate 112, and facilitating subsequent fixing operations of the first sealing plate 112. Similarly, two ends of the fourth bent portion 1116 respectively form two second notches with the two first bent portions 1112. The second sealing plate 113 is inserted into the two second notches, achieving pre-positioning of the second sealing plate 113, and facilitating subsequent fixing operations of the second sealing plate 113.

By adopting the technical solution of this embodiment, the first sealing plate 112 is inserted between one end portion of the first bent portion 1112 and the third bent portion 1115, which can achieve pre-positioning of the first sealing plate 112 to facilitate subsequent fixing operations. Similarly, the second sealing plate 113 is inserted between the other end portion of the first bent portion 1112 and the fourth bent portion 1116, which can also achieve pre-positioning of the second sealing plate 113 to facilitate subsequent fixing operations.

In an embodiment, an end portion of the second connection segment 11132 close to the first sealing plate 112 is welded to the first sealing plate 112. An edge of the third bent portion 1115 is welded and connected to the first sealing plate 112. An end portion of the second connection segment 11132 close to the second sealing plate 113 is welded to the second sealing plate 113. An edge of the fourth bent portion 1116 is welded and connected to the second sealing plate 113. Thus, the first sealing plate 112, the second sealing plate 113, and the plate member 111 are fixedly connected, and the fixed connection operation is simple with good connection reliability, helping to improve the structural reliability of the first box body 110. In addition, the first sealing plate 112, the second sealing plate 113, and the plate member 111 are connected by welding, which can also achieve the sealed connection between the first sealing plate 112, the second sealing plate 113, and the plate member 111, helping to improve the sealing performance of the accommodating space 1101.

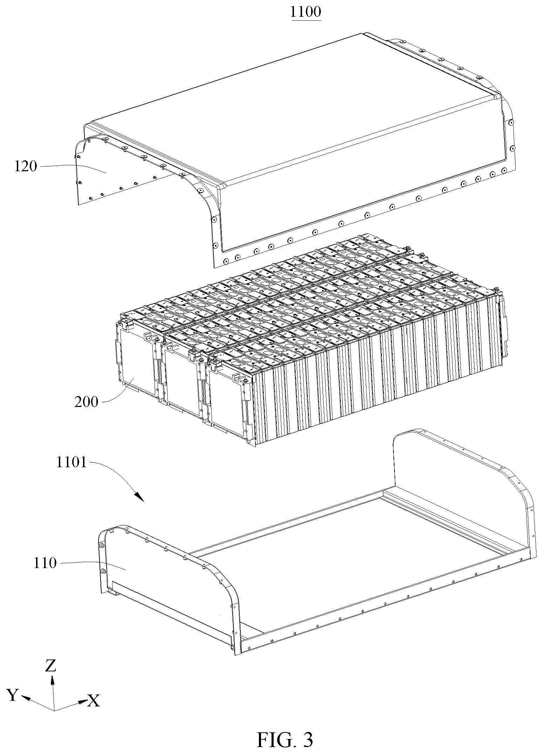

In another embodiment of this application, referring to FIGs. 3, 4, and 11, the battery box 100 further includes a second box body 120. Two opposite side portions of the second box body 120 along the first direction are respectively connected to the two first bent portions 1112. One of two opposite side portions of the second box body 120 along the second direction is connected to the first sealing plate 112, and the other of the two opposite side portions of the second box body 120 along the second direction is connected to the second sealing plate 113.

Two opposite sides of the second box body 120 are respectively connected to the two first bent portions 1112, and the other two opposite sides of the second box body 120 are respectively connected to the second sealing plate 113 and the third sealing plate, so that the first box body 110 and the second box body 120 jointly enclose the accommodating space 1101. For example, the first sealing plate 112 and the second sealing plate 113 are disposed perpendicular to the plate body portion 1111 to form a U-shaped structure. The second box body 120 is also of a U-shaped structure. The second box body 120 inversely fits the first box body 110. The first sealing plate 112 and the second sealing plate 113 seal openings on two opposite sides of the second box body 120. Edges of the first sealing plate 112 and the second sealing plate 113 are provided with connection portions extending facing away from the accommodating space 1101. The connection portions are fixedly connected to the second box body 120 through the fastener 140. Two opposite side portions of the second box body 120 are respectively connected to the reinforcing portions 1114 located on both sides, so that the first box body 110 and the second box body 120 jointly enclose the accommodating space 1101.

By adopting the technical solution of this embodiment, two opposite sides of the second box body 120 are respectively connected to two second bent portions 1113. The other opposite sides of the second box body 120 are respectively connected to the first sealing plate 112 and the second sealing plate 113, so that the first box body 110 and the second box body 120 enclose the accommodating space 1101, and the battery box 100 has a simple structure and is convenient to process and manufacture.

In another embodiment of this application, referring to FIGs. 4 and 11, the first box body 110 further includes a plurality of mounting beams 114 configured to be connected to the plate body portion 1111. The plurality of mounting beams 114 are spaced apart along a second direction. The first direction intersects the second direction.

The mounting beams 114 may refer to beams connected to the plate body portion 1111 and spaced apart along the second direction. The mounting beam 114 may be fixed on the electric apparatus to achieve mounting of the battery 1100. The number of the mounting beams 114 may be but is not limited to two, three, four, or five. For example, the mounting beams 114 extend along the first direction. Three mounting beams 114 are spaced apart along the second direction. The plurality of mounting beams 114 may be arranged at equal intervals or unequal intervals, which can be specifically set according to actual needs. Certainly, in another embodiment, the mounting beams 114 may also extend along another direction.

By adopting the technical solution of this embodiment, the provision of the plurality of mounting beams 114 can reinforce the structural strength of the plate body portion 1111 and improve the structural strength of the first box body 110 in a width direction, thereby helping to improve the usage reliability of the battery 1100 and the electric apparatus.

In another embodiment of this application, referring to FIGs. 4 and 11, the plurality of mounting beams 114 are located on a side portion of the plate body portion 1111 facing away from the accommodating space 1101.

It can be understood that the mounting beams 114 are located outside the accommodating space 1101.

By adopting the technical solution of this embodiment, the mounting beams 114 are located outside the accommodating space 1101, and the mounting beams 114 do not occupy the space of the accommodating space 1101, so that the accommodating space 1101 can accommodate more battery cells 200, helping to increase the energy density of the battery 1100.

In another embodiment of this application, referring to FIGs. 3, 4, and 11, the first box body 110 further includes a first module beam 115 and a second module beam 116 configured to be connected to the battery cell 200 and the plate member 111. The first module beam 115 and the second module beam 116 are located in the accommodating space 1101. The first module beam 115 is located at one of two edge portions of the plate body portion 1111 oppositely distributed along the second direction. The second module beam 116 is located at the other of the two edge portions of the plate body portion 1111 oppositely distributed along the second direction.

The two edge portions of the plate body portion 1111 oppositely distributed along the second direction are both provided with module beams. One module beam is the first module beam 115, and the other module beam is the second module beam 116. The module beams are located in the accommodating space 1101, and the module beams are connected to the plate member 111 to achieve fixation of the module beams in the accommodating space 1101. In addition, the module beams are connected to the battery cell 200, so that the module beams support and fix the battery cell 200, helping to improve the usage reliability of the battery 1100.

By adopting the technical solution of this embodiment, the first module beam 115 and the second module beam 116 can support and fix the battery cell 200, improving the usage reliability of the battery 1100.

In another embodiment of this application, referring to FIGs. 4 and 11, in the second direction, the first one of the mounting beams 114 is disposed opposite the first module beam 115, and/or the last one of the mounting beams 114 is disposed opposite the second module beam 116.

The plurality of mounting beams 114 are sequentially arranged along the second direction. The first mounting beam 114 is disposed opposite the first module beam 115. The first mounting beam 114 and the first module beam 115 are located on two opposite sides of the plate body portion 1111. One edge portion of the plate body portion 1111 along the second direction is clamped between the first mounting beam 114 and the first module beam 115, which can improve the structural strength of the first box body 110 at the first module beam 115, helping to improve the structural strength of the first box body 110. Similarly, the last mounting beam 114 is disposed opposite the second module beam 116, and the last mounting beam 114 and the second module beam 116 are located on the two opposite sides of the plate body portion 1111. The other edge portion of the plate body portion 1111 along the second direction can be clamped between the first mounting beam 114 and the second module beam 116, which can improve the structural strength of the first box body 110 at the second module beam 116, helping to improve the structural strength of the first box body 110.

In a possible implementation, in the second direction, the first mounting beam 114 is disposed opposite the first module beam 115, which can improve the structural strength of the first box body 110 at the first module beam 115, helping to improve the structural strength of the first box body 110.

In a possible implementation, in the second direction, the last mounting beam 114 is disposed opposite the second module beam 116, which can improve the structural strength of the first box body 110 at the second module beam 116, helping to improve the structural strength of the first box body 110.

In a possible implementation, in the second direction, the first mounting beam 114 is disposed opposite the first module beam 115, and the last mounting beam 114 is disposed opposite the second module beam 116, which can improve the structural strength of two opposite side portions of the first box body 110 along the second direction, effectively improving the structural strength of the first box body 110.

By adopting the technical solution of this embodiment, the structural strength of the first box body 110 can be improved, helping to improve the usage reliability of the battery 1100.

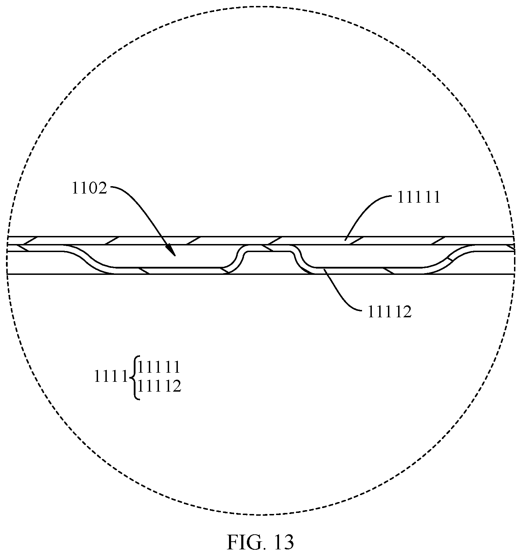

In another embodiment of this application, referring to FIGs. 12 and 13, the plate body portion 1111 is provided with a heat exchange channel 1102 for a heat exchange medium to flow through.

It can be understood that the plate member 111 may be a heat exchange member. The heat exchange member may refer to a component that performs heat exchange with the battery cell 200, where the heat exchange channel 1102 may refer to a channel in the heat exchange member for the heat exchange medium to flow through. A portion of the heat exchange member provided with the heat exchange channel 1102 is the plate body portion 1111. Edge portions on two opposite sides of the heat exchange member are bent to form the first bent portion 1112, the second bent portion 1113, and the reinforcing portion 1114. Edge portions on the other two opposite sides of the heat exchange member are bent to form the third bent portion 1115 and the fourth bent portion 1116. During the flow of the heat exchange medium in the heat exchange channel 1102, the heat exchange medium can perform heat exchange with the battery cell 200, thereby achieving temperature control of the battery cell 200. The heat exchange member may be but is not limited to a cold plate. The heat exchange medium may be but is not limited to air, water, or coolant. The plate member 111 may be made of materials with good thermal conductivity such as aluminum alloy or copper to meet heat exchange needs.

By adopting the technical solution of this embodiment, the heat exchange channel 1102 can achieve temperature control of the battery cell 200, helping to improve the performance of the battery cell 200 and the battery 1100.

In another embodiment of this application, referring to FIGs. 12 and 13, the plate body portion 1111 further includes a first plate body sub-portion 11111 and a second plate body sub-portion 11112 connected to each other. The first plate body sub-portion 11111 and the second plate body sub-portion 11112 are stacked along a direction from the plate body portion 1111 to the accommodating space 1101. At least one of the first plate body sub-portion 11111 and the second plate body sub-portion 11112 is recessed away from the other to form the heat exchange channel 1102.

The direction from the plate body portion 1111 to the accommodating space 1101 may refer to the height direction of the first box body 110.

The plate body portion 1111 includes two portions stacked along the height direction of the first box body 110. One portion is the first plate body sub-portion 11111, and the other portion is the second plate body sub-portion 11112.

At least one of the first plate body sub-portion 11111 and the second plate body sub-portion 11112 is recessed away from the other to form the heat exchange channel 1102. It can be understood that the first plate body sub-portion 11111 is recessed away from the second plate body sub-portion 11112 to form a first space, where the first space is the heat exchange channel 1102. Alternatively, the second plate body sub-portion 11112 is recessed away from the second plate body sub-portion 11112 to form a second space, where the second space is the heat exchange channel 1102. Alternatively, the first plate body sub-portion 11111 is recessed away from the second plate body sub-portion 11112 to form a first space, the second plate body sub-portion 11112 is recessed away from the second plate body sub-portion 11112 to form a second space, and the first space and the second space jointly form the heat exchange channel 1102. Specifically, the recesses of the first plate body sub-portion 11111 and the second plate body sub-portion 11112 can form the heat exchange channel 1102 by blow molding or stamping. Compared with other methods, the blow molding method allows thicknesses of the first plate body sub-portion 11111 and the second plate body sub-portion 11112 to be set to be smaller, making the mass of the first box body 110 smaller.

By adopting the technical solution of this embodiment, the structure of the plate body portion 1111 is simple, helping to reduce the manufacturing cost of the battery box 100.

The following describes the battery box 100 in combination with some embodiments.

### Embodiment 1

In this embodiment, referring to FIGs. 1 to 11, the battery box 100 includes a first box body 110 and a second box body 120. The first box body 110 fits the second box body 120 to enclose an accommodating space 1101. The first box body 110 includes a plate member 111. Two edge portions of the plate member 111 oppositely distributed along a first direction are subjected to roll-bending to form a first bent portion 1112, a second bent portion 1113, and a reinforcing portion 1114. A portion of the plate member 111 between the two first bent portions 1112 is a plate body portion 1111. The first bent portion 1112 is bent from an edge portion of the plate body portion 1111 to the accommodating space 1101.

In this embodiment, the first bent portion 1112 includes a bent arc segment 11121 and a first connection segment 11122. The bent arc segment 11121 is connected between the first connection segment 11122 and the plate body portion 1111. The second bent portion 1113 is bent from an end portion of the first connection segment 11122 facing away from the plate body portion 1111 to the plate body portion 1111. The second bent portion 1113 is located on a side portion of the first connection segment 11122 facing away from the plate body portion 1111. The second bent portion 1113 includes a bent semicircular segment 11131 and a second connection segment 11132. One end of the bent semicircular segment 11131 is connected to an end portion of the first connection segment 11122 facing away from the plate body portion 1111, and the other end of the bent semicircular segment 11131 is connected to one end of the second connection segment 11132. The second connection segment 11132 is attached to the first connection segment 11122. One end of the reinforcing portion 1114 is connected to an end portion of the second connection segment 11132 close to the plate body portion 1111, and the other end of the reinforcing portion 1114 is connected to a surface of the plate body portion 1111 facing away from the accommodating space 1101. The reinforcing portion 1114 includes a first reinforcing segment 11141, a second reinforcing segment 11142, and a third reinforcing segment 11143 connected in sequence. One end of the first reinforcing segment 11141 facing away from the second reinforcing segment 11142 is connected to an end portion of the second connection segment 11132 close to the plate body portion 1111. One end of the third reinforcing segment 11143 facing away from the second reinforcing segment 11142 is connected to the surface of the plate body portion 1111 facing away from the accommodating space 1101. The second reinforcing segment 11142 is spaced apart from the surface of the plate body portion 1111 facing away from the accommodating space 1101. The first reinforcing segment 11141, the second reinforcing segment 11142, the third reinforcing segment 11143, and the plate body portion 1111 jointly enclose a cavity 11145. The reinforcing portion 1114 further includes a fourth reinforcing segment 11144. One end of the fourth reinforcing segment 11144 is connected to an end portion of the third reinforcing segment 11143 facing away from the second reinforcing segment 11142. The fourth reinforcing segment 11144 is attached to the surface of the plate body portion 1111 facing away from the accommodating space 1101.

In this embodiment, the first connection segment 11122 is disposed perpendicular to the plate body portion 1111. The second connection segment 11132 is attached to the first connection segment 11122. The first reinforcing segment 11141 and the second connection segment 11132 are located in a same plane. The first reinforcing segment 11141 is located on a side of the plate body portion 1111 facing away from the accommodating space 1101. The first reinforcing segment 11141 and the second connection segment 11132 are divided by a plane where the surface of the plate body portion 1111 facing away from the accommodating space 1101 is located. The second reinforcing segment 11142 is vertically bent from an end portion of the first reinforcing segment 11141 facing away from the second connection segment 11132 to the plate body portion 1111, so that the second reinforcing segment 11142 is parallel to and spaced apart from the surface of the plate body portion 1111 facing away from the accommodating space 1101. The third reinforcing segment 11143 is vertically bent from the second reinforcing segment 11142 facing away from the first reinforcing segment 11141 to the plate body portion 1111, so that the first reinforcing segment 11141 and the third reinforcing segment 11143 are respectively vertically connected to two ends of the second reinforcing segment 11142. In addition, the first reinforcing segment 11141, the second reinforcing segment 11142, the third reinforcing segment 11143, and the plate body portion 1111 jointly enclose a rectangular cavity 11145. Such an arrangement makes the structure of the reinforcing portion 1114 simple and regular, facilitating processing and manufacturing. In addition, the reinforcing portion 1114 and the plate body portion 1111 form a rectangular cavity structure, so that the plate body portion 1111 can be well supported and fixed, and the structural strength of the first box body 110 is improved.

In this embodiment, two edge portions of the plate member 111 oppositely distributed along the second direction are bent to the accommodating space 1101 to form a third bent portion 1115 and a fourth bent portion 1116 respectively. The first box body 110 further includes a first sealing plate 112 and a second sealing plate 113. Two ends of the third bent portion 1115 respectively form two first notches with the two first bent portions 1112. The first sealing plate 112 is inserted into the two first notches, achieving pre-positioning of the first sealing plate 112, and facilitating subsequent fixing operations of the first sealing plate 112. Similarly, two ends of the fourth bent portion 1116 respectively form two second notches with the two first bent portions 1112. The second sealing plate 113 is inserted into the two second notches, achieving pre-positioning of the second sealing plate 113, and facilitating subsequent fixing operations of the second sealing plate 113. An end portion of the second connection segment 11132 close to the first sealing plate 112 is welded to the first sealing plate 112. An edge of the third bent portion 1115 is welded and connected to the first sealing plate 112. An end portion of the second connection segment 11132 close to the second sealing plate 113 is welded to the second sealing plate 113. An edge of the fourth bent portion 1116 is welded and connected to the second sealing plate 113. Thus, the first sealing plate 112, the second sealing plate 113, and the plate member 111 are fixedly connected, and the fixed connection operation is simple with good connection reliability, helping to improve the structural reliability of the first box body 110. In addition, the first sealing plate 112, the second sealing plate 113, and the plate member 111 are connected by welding, which can also achieve sealed connection between the first sealing plate 112, the second sealing plate 113, and the plate member 111, helping to improve the sealing performance of the accommodating space 1101.

In this embodiment, the first box body 110 further includes three mounting beams 114. The mounting beams 114 extend along the first direction. The three mounting beams 114 are spaced apart along the second direction. The plurality of mounting beams 114 may be arranged at equal intervals or unequal intervals.

In this embodiment, the first box body 110 further includes a first module beam 115 and a second module beam 116 configured to be connected to the battery cell 200 and the plate member 111. The first module beam 115 and the second module beam 116 are located in the accommodating space 1101. The first module beam 115 is located at one of two edge portions of the plate body portion 1111 oppositely distributed along the second direction. The second module beam 116 is located at the other of the two edge portions of the plate body portion 1111 oppositely distributed along the second direction. In the second direction, the first mounting beam 114 is disposed opposite the first module beam 115, and the last mounting beam 114 is disposed opposite the second module beam 116.

In this embodiment, the first sealing plate 112 and the second sealing plate 113 are disposed perpendicular to the plate body portion 1111 to form a U-shaped structure. The second box body 120 is also of a U-shaped structure. The second box body 120 inversely fits the first box body 110. The first sealing plate 112 and the second sealing plate 113 seal openings on two opposite sides of the second box body 120. Edges of the first sealing plate 112 and the second sealing plate 113 are provided with connection portions extending facing away from the accommodating space 1101. The connection portions are fixedly connected to the second box body 120 through the fastener 140. The first reinforcing segment 11141 is provided with first connection hole 11146. A bolt passes through a side portion of the second box body 120 and then passes through the first connection hole 11146 to be screwed with a nut, so that the first box body 110 and the second box body 120 are fixedly connected. In addition, under the connection action of the fastener 140, the sealing member 130 can also be stably clamped and fixed between the second connection segment 11132 and an inner wall surface of the second box body 120, thereby achieving the sealed connection.

### Embodiment 2

The difference between this embodiment and Embodiment 1 is as follows: referring to FIGs. 12 and 13, the plate body portion 1111 further includes a first plate body sub-portion 11111 and a second plate body sub-portion 11112 connected to each other. The first plate body sub-portion 11111 and the second plate body sub-portion 11112 are stacked along a direction from the plate body portion 1111 to the accommodating space 1101. The first plate body sub-portion 11111 is recessed away from the second plate body sub-portion 11112 to form a first space, the second plate body sub-portion 11112 is recessed away from the second plate body sub-portion 11112 to form a second space, and the first space and the second space jointly form a heat exchange channel 1102.

In another embodiment of this application, a method for manufacturing a battery box is provided, where the method for manufacturing a battery box is used for manufacturing the battery box 100 according to the foregoing embodiments; and the method for manufacturing a battery box includes the following step: bending an edge portion of a plate member 111 to an accommodating space 1101 to form a plate body portion 1111 and a first bent portion 1112.

In the method for manufacturing a battery box according to the embodiments of this application, the edge portion of the plate member 111 is bent to form the bent portion and the plate body portion 1111. Compared with a box body formed by blow molding, a first box body 110 formed by bending has a small bent fillet radius at the edge portion of the plate member 111, which can reduce a width dimension of the first box body 110, reduce a width dimension of the battery box 100, and reduce the space occupied by a battery 1100 in an electric apparatus, thereby helping to improve the structural compactness and usage performance of the electric apparatus.

In another embodiment of this application, the method for manufacturing a battery box includes the following method: roll-bending an edge portion of a plate member 111 to form a plate body and a first bent portion 1112.

By adopting the technical solution of this embodiment, the edge portion of the plate member 111 can be bent by rolling or by a bending machine, and the manufacturing method is simple. In addition, compared with the box body formed by blow molding, the first box body 110 formed by roll-bending has a small bent fillet radius at the edge portion of the plate member 111, which can reduce the width dimension of the first box body 110, reduce the width dimension of the battery box 100, and reduce the space occupied by the battery 1100 in the electric apparatus, thereby helping to improve the structural compactness and usage performance of the electric apparatus.

In another embodiment of this application, the plate body portion 1111 further includes a first plate body sub-portion 11111 and a second plate body sub-portion 11112 connected to each other. The first plate body sub-portion 11111 and the second plate body sub-portion 11112 are stacked along a direction from the plate body portion 1111 to the accommodating space 1101. At least one of the first plate body sub-portion 11111 and the second plate body sub-portion 11112 is recessed away from the other by blow molding to form a heat exchange channel 1102 for a heat exchange medium to flow through.

By adopting the technical solution of this embodiment, recesses of the first plate body sub-portion 11111 and the second plate body sub-portion 11112 can form the heat exchange channel 1102 by blow molding or stamping. Compared with other methods, the blow molding method allows thicknesses of the first plate body sub-portion 11111 and the second plate body sub-portion 11112 to be set to be smaller, making the mass of the first box body 110 smaller.

In another embodiment of this application, a battery 1100 is provided, including the battery box 100 according to the foregoing embodiments and at least one battery cell 200, where the battery cell 200 is accommodated in the accommodating space 1101, or the battery 1100 includes a battery box 100 manufactured by the method for manufacturing a battery box according to the foregoing embodiments and at least one battery cell 200, where the battery cell 200 is accommodated in the accommodating space 1101.

In the battery 1100 according to the embodiments of this application, the above battery box 100 or a battery box 100 manufactured by the above method for manufacturing a battery box is adopted, which reduces a width dimension of a first box body 110, reduces a width dimension of the battery box 100, and reduces the space occupied by the battery 1100 in an electric apparatus, thereby helping to improve the structural compactness and usage performance of the electric apparatus.

In another embodiment of this application, an electric apparatus is provided, including the battery 1100 according to the foregoing embodiments.

In the electric apparatus of the embodiments of this application, the above battery 1100 is adopted, which reduces a width dimension of a first box body 110, reduces a width dimension of a battery box 100, and reduces the space occupied by the battery 1100 in the electric apparatus, thereby helping to improve the structural compactness and usage performance of the electric apparatus.

The foregoing description of the embodiments tends to emphasize the differences between the embodiments, and the same or similar parts can be referred to each other. For brevity, details are not described herein again.

Finally, it should be noted that the embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof without departing from the essence of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery box, wherein the battery box comprises:
a first box body, wherein the first box body comprises a plate member, one side of the plate member is provided with an accommodating space for accommodating a battery cell, the plate member comprises a plate body portion and a first bent portion, and the first bent portion is bent from an edge portion of the plate body portion to the accommodating space.

2. The battery box according to claim 1, wherein the first bent portion comprises a bent arc segment and a first connection segment, and the bent arc segment is connected between the first connection segment and the plate body portion.

3. The battery box according to claim 2, wherein a thickness of the first connection segment is t, and a radius of the bent arc segment is R; wherein 0.8 ≤ R/t ≤ 2, preferably 1 ≤ R/t ≤ 1.5.

4. The battery box according to claim 2 or 3, wherein the radius of the bent arc segment is R, wherein 0.5 mm ≤ R ≤ 4 mm, preferably 1 mm ≤ R ≤ 2 mm.

5. The battery box according to any one of claims 2 to 4, wherein an included angle between the first connection segment and the plate body portion is α, wherein 85° ≤ α ≤ 95°, preferably 89° ≤ α ≤ 91°.

6. The battery box according to any one of claims 1 to 5, wherein the plate member further comprises a second bent portion, the second bent portion is bent from an end portion of the first bent portion facing away from the plate body portion to the plate body portion, and the second bent portion is located on a side portion of the first bent portion facing away from the plate body portion.

7. The battery box according to claim 6, wherein the second bent portion comprises a bent semicircular segment and a second connection segment, one end of the bent semicircular segment is connected to the end portion of the first bent portion facing away from the plate body portion, and the other end of the bent semicircular segment is connected to one end of the second connection segment.

8. The battery box according to claim 7, wherein the second connection segment is attached to the first bent portion.

9. The battery box according to any one of claims 6 to 8, wherein the plate member further comprises a reinforcing portion, one end of the reinforcing portion is connected to an end portion of the second bent portion close to the plate body portion, and the other end of the reinforcing portion is connected to a surface of the plate body portion facing away from the accommodating space.

10. The battery box according to claim 9, wherein the reinforcing portion and the plate body portion enclose a cavity.

11. The battery box according to claim 10, wherein the reinforcing portion comprises a first reinforcing segment, a second reinforcing segment, and a third reinforcing segment connected in sequence, one end of the first reinforcing segment facing away from the second reinforcing segment is connected to the end portion of the second bent portion close to the plate body portion, and one end of the third reinforcing segment facing away from the second reinforcing segment is connected to the surface of the plate body portion facing away from the accommodating space; and
the second reinforcing segment is spaced apart from the surface of the plate body portion facing away from the accommodating space, so that the first reinforcing segment, the second reinforcing segment, the third reinforcing segment, and the plate body portion jointly enclose the cavity.

12. The battery box according to claim 11, wherein the reinforcing portion further comprises a fourth reinforcing segment, one end of the fourth reinforcing segment is connected to an end portion of the third reinforcing segment facing away from the second reinforcing segment, and the fourth reinforcing segment is attached to the surface of the plate body portion facing away from the accommodating space.

13. The battery box according to any one of claims 9 to 12, wherein the battery box further comprises a second box body, the second box body is connected to the second bent portion in a sealing manner, and the first box body and the second box body enclose the accommodating space.

14. The battery box according to claim 13, wherein the second bent portion is located in the second box body, and a sealing member is disposed between a surface of the second bent portion facing away from the plate body portion and an inner wall surface of the second box body.

15. The battery box according to claim 14, wherein the battery box further comprises a fastener, the reinforcing portion is provided with a first connection hole in communication with the cavity, and the fastener passes through the first connection hole and is connected to the second box body, so that the sealing member is clamped and fixed between the surface of the second bent portion facing away from the plate body portion and the inner wall surface of the second box body.

16. The battery box according to any one of claims 10 to 15, wherein the reinforcing portion is provided with a mounting structure for fixing the battery box.

17. The battery box according to claim 16, wherein the mounting structure comprises a second connection hole, and the second connection hole is in communication with the cavity.

18. The battery box according to any one of claims 9 to 17, wherein in a direction from the first bent portion to the second bent portion, a dimension of the plate body portion is L₁, and a dimension of the reinforcing portion is L₂; wherein 0.05 ≤ L₂/L₁ ≤ 0.25, preferably 0.1 ≤ L₂/L₁ ≤ 0.2.

19. The battery box according to any one of claims 1 to 18, wherein two edge portions of the plate body portion oppositely distributed along a first direction are each provided with the first bent portion.

20. The battery box according to claim 19, wherein the plate member further comprises a third bent portion and a fourth bent portion, the third bent portion is bent from one of two edge portions of the plate body portion oppositely distributed along a second direction to the accommodating space, the fourth bent portion is bent from the other of the two edge portions of the plate body portion oppositely distributed along the second direction to the accommodating space, and the first direction intersects the second direction.

21. The battery box according to claim 20, wherein the first box body further comprises a first sealing plate and a second sealing plate configured to be connected to the plate member; the first sealing plate is inserted between one end portion of the first bent portion and the third bent portion; the second sealing plate is inserted between the other end portion of the first bent portion and the fourth bent portion; and the first sealing plate, the second sealing plate, and the plate member enclose the accommodating space.

22. The battery box according to claim 21, wherein the battery box further comprises a second box body, two opposite side portions of the second box body along the first direction are respectively connected to two first bent portions, one of two opposite side portions of the second box body along the second direction is connected to the first sealing plate, and the other of the two opposite side portions of the second box body along the second direction is connected to the second sealing plate.

23. The battery box according to any one of claims 19 to 22, wherein the first box body further comprises a plurality of mounting beams configured to be connected to the plate body portion, the plurality of mounting beams are spaced apart along a second direction, and the first direction intersects the second direction.

24. The battery box according to claim 23, wherein the plurality of mounting beams are located on a side portion of the plate body portion facing away from the accommodating space.

25. The battery box according to claim 24, wherein the first box body further comprises a first module beam and a second module beam configured to be connected to the battery cell and the plate member, the first module beam and the second module beam are located in the accommodating space, the first module beam is located at one of two edge portions of the plate body portion oppositely distributed along the second direction, and the second module beam is located at the other of the two edge portions of the plate body portion oppositely distributed along the second direction.

26. The battery box according to claim 25, wherein in the second direction, the first one of the mounting beams is disposed opposite the first module beam, and/or the last one of the mounting beams is disposed opposite the second module beam.

27. The battery box according to any one of claims 1 to 26, wherein the plate body portion is provided with a heat exchange channel for a heat exchange medium to flow through.

28. The battery box according to claim 27, wherein the plate body portion further comprises a first plate body sub-portion and a second plate body sub-portion connected to each other, and the first plate body sub-portion and the second plate body sub-portion are stacked along a direction from the plate body portion to the accommodating space; and
at least one of the first plate body sub-portion and the second plate body sub-portion is recessed away from the other to form the heat exchange channel.

29. A method for manufacturing a battery box, wherein the method for manufacturing a battery box is used for manufacturing the battery box according to any one of claims 1 to 28; and the method for manufacturing a battery box comprises the following step: bending an edge portion of the plate member to the accommodating space to form the plate body portion and the first bent portion.

30. The method for manufacturing a battery box according to claim 29, wherein the method for manufacturing a battery box comprises the following method: roll-bending an edge portion of the plate member to form the plate body portion and the first bent portion.

31. The method for manufacturing a battery box according to claim 29 or 30, wherein the plate body portion further comprises a first plate body sub-portion and a second plate body sub-portion connected to each other; the first plate body sub-portion and the second plate body sub-portion are stacked along a direction from the plate body portion to the accommodating space; and at least one of the first plate body sub-portion and the second plate body sub-portion is recessed away from the other by blow molding to form a heat exchange channel for a heat exchange medium to flow through.

32. A battery, wherein the battery comprises the battery box according to any one of claims 1 to 28 and at least one battery cell, wherein the battery cell is accommodated in the accommodating space; or the battery comprises a battery box manufactured by the method for manufacturing a battery box according to any one of claims 29 to 31 and at least one battery cell, wherein the battery cell is accommodated in the accommodating space.

33. An electric apparatus, comprising the battery according to claim 32.
